# EUROPEAN PATENT SPECIFICATION

(11) **EP 4 392 942 B1**
(45) Date of publication and mention of the grant of the patent: **20.05.2026**
(21) Application number: 22782632.8
(22) Date of filing: 26.08.2022
(51) Int. Cl.: G06V 10/25, G06V 30/148, G06V 20/62

(54) **AUTOMATIC LANGUAGE IDENTIFICATION IN IMAGE-BASED DOCUMENTS**
AUTOMATISCHE SPRACHIDENTIFIZIERUNG IN BILDBASIERTEN DOKUMENTEN
IDENTIFICATION AUTOMATIQUE DE LANGUE DANS DES DOCUMENTS BASÉS SUR UNE IMAGE

(30) Priority: 27.08.2021 US 202163238011 P
(43) Date of publication of application: 03.07.2024
(73) Proprietor: Oracle International Corporation, Redwood Shores, CA 94065 (US)
(72) Inventor: GONG, Liyu, Redwood Shores, California 94065 (US); DENG, Zhonghai, Redwood Shores, California 94065 (US); WANG, Yuying, Redwood Shores, California 94065 (US); ZADEH, Iman, Redwood Shores, California 94065 (US); QIAN, Jun, Redwood Shores, California 94065 (US)
(74) Representative: Gill Jennings & Every LLP
(86) International application number: PCT/US2022/075543
(87) International publication number: WO 2023/028604

(56) References cited:
- WO-A1-2021/161095
- US-A1- 2017 004 374

## Description

### CROSS-REFERENCE TO RELATED APPLICATION(S)

The present patent application claims priority to U.S. Provisional Patent Application No. 63/238,011, titled "AUTOMATIC LANGUAGE IDENTIFICATION IN IMAGE-BASED DOCUMENTS," and filed August 27, 2021.

### BACKGROUND

Computer systems associated with various entities can obtain and process a number of documents. These documents can include either text-based documents or image-based documents. Text-based documents are computer files that contain native character (e.g., Unicode) sequences. On the other hand, image-based documents (e.g., documents that are electronically scanned using a scanner) are collections of image pixels and text characters are represented by pixel values.

For such received documents, a computer system can attempt to identify the native language of the document. For image-based documents, the computer system may need to understand the document content from the pixel representation of text information, which can be more complex than understanding native standard character codes (e.g., Unicode included in text-based documents).

Patent document WO 2021/161095 Al forms part of the relevant background art and discloses a solution for text recognition in an image. In this solution, a target text line area, which is expected to include a text to be recognized, is determined from an image. Probability distribution information of a character model element(s) present in the target text line area is determined using a single character model. Patent document US 2017/004374 A1 also forms part of the relevant background art and discloses image processing systems and methods that enable recognizing text from images. The regions of an image that are likely to contain text are initially identified. Sequential prediction, action and analysis procedures are executed on the initial predictions for the image regions comprising the text/writing.

### SUMMARY

The present invention is defined by the appended claims. The present embodiments relate to identifying a language of text included in an image-based document. A first example embodiment provides a method performed by a cloud infrastructure node for identifying a language of text included in an image-based document. The method includes receiving an image-based document. The method also includes detecting a plurality of text lines included in the image-based document. Each of the plurality of text lines is bounded by a bounding box specifying a position of each of the plurality of text lines in the image-based document. The method also includes identifying a set of bounding boxes to be sampled.

The method also includes processing text included in each of the set of bounding boxes to be sampled to identify a first primary script classification of multiple primary script classifications that corresponds to the text included in each of the set of bounding boxes. Each of the multiple primary script classifications corresponds to one or more languages.

Responsive to determining that the first primary script classification corresponds to more than one language, the method also includes processing the text included in each of the set of bounding boxes to generate a text string corresponding to each of the set of bounding boxes and processing each generated text string to determine a language that corresponds to the first primary script classification. The method also includes providing an output of the determined language for the image-based document.

A second example embodiment relates to a cloud infrastructure node configured to identify a language of text included in an image-based document. The cloud infrastructure node includes a processor and a non-transitory computer-readable medium. The non-transitory computer-readable medium includes instructions that, when executed by the processor, cause the processor to receive an image-based document. The instructions further cause the processor to detect a plurality of text lines included in the image-based document. Each of the plurality of text lines is bounded by a bounding box comprising a set of coordinates specifying a position of each text line in the image-based document. The instructions further cause the processor to identify a set of bounding boxes to be sampled as bounding boxes that comprise a greatest width value derived from the set of coordinates for each bounding box.

The instructions further cause the processor to process text lines included in each of the set of bounding boxes to identify a first primary script classification of multiple primary script classifications. Each of the multiple primary script classifications corresponds to one or more languages with at least one common characteristic.

Responsive to determining that the first primary script classification corresponds to more than one language, the instructions further cause the processor to process text lines included in each of the set of bounding boxes to be sampled to generate a text string for each of the set of bounding boxes and process each generated text string of each of the set of bounding boxes to determine a language of the more than one language corresponding to the first primary script classification. The instructions further cause the processor to provide an output of the identified language for the image-based document.

A third example embodiment relates to a non-transitory computer-readable medium. The non-transitory computer-readable medium includes stored thereon a sequence of instructions which, when executed by a processor causes the processor to execute a process. The process includes receiving an image-based document. The process also includes detecting a plurality of text lines included in the image-based document. Each of the plurality of text lines is bounded by a bounding box in the image-based document. The process also includes identifying a set of bounding boxes to be sampled.

The process also includes processing text included in each of the set of bounding boxes to be sampled to identify a first primary script classification of multiple primary script classifications. Each primary script classification specifies one or more languages. The process also includes, responsive to determining that the first primary script classification specifies only one language, identifying a language for the image-based document as the one language associated with the first primary script classification. The process also includes, responsive to determining that the first primary script classification specifies more than one language, processing the text included in each of the set of bounding boxes to be sampled to generate a text string for each of the set of bounding boxes and processing each generated text string of each of the set of bounding boxes to determine a language of the more than one language corresponding to the first primary script classification. The process also includes providing an output of the identified language for the image-based document.

### BRIEF DESCRIPTION OF DRAWINGS

FIG. 1 is an example flow diagram for detecting a native language in an image-based document, according to at least one embodiment.
FIG. 2 illustrates an example cloud infrastructure, according to at least one embodiment.
FIG. 3 provides a first example illustration for identifying a language for an image-based document, according to at least one embodiment.
FIG. 4 provides a second example illustration for identifying a language for an image-based document, according to at least one embodiment.
FIG. 5 is a flow diagram of an example method performed by a cloud infrastructure node for identifying a language of text included in an image-based document, according to at least one embodiment.
FIG. 6 is a block diagram illustrating one pattern for implementing a cloud infrastructure as a service system, according to at least one embodiment.
FIG. 7 is a block diagram illustrating another pattern for implementing a cloud infrastructure as a service system, according to at least one embodiment.
FIG. 8 is a block diagram illustrating another pattern for implementing a cloud infrastructure as a service system, according to at least one embodiment.
FIG. 9 is a block diagram illustrating another pattern for implementing a cloud infrastructure as a service system, according to at least one embodiment.
FIG. 10 is a block diagram illustrating an example computer system, according to at least one embodiment.

### DETAILED DESCRIPTION

The present embodiments relate to identifying a native language of text included in an image-based document. A cloud infrastructure node (e.g., one or more interconnected computing devices implementing a cloud infrastructure) can utilize one or more deep learning models to detect text lines in the document, determine a primary script classification (e.g., a Latin-based script classification, a Chinese-based script classification, etc.), and derive a primary language of the text lines that corresponds to the determined primary script classification.

For example, a cloud infrastructure node can receive an image-based document (e.g., a document scanned via an electronic scanner). A plurality of text lines in the image-based document can be detected, with each text line bounded by a bounding box providing a position of the text line in the document. Text included in a set of bounding boxes to be sampled can be processed to identify a first primary script classification (e.g., Latin, Arabic, Chinese, Japanese, etc.). This sampling and processing is referred to herein as "bbox sampling" or "bbox detection."

The text included in each of the set of bounding boxes can be processed to generate a text string that can be used to determine a language that corresponds to the determined primary script classification. For instance, if the determined primary script classification includes a Latin-based grouping of languages, the text strings can be processed to identify that the language comprises German or Spanish. Various document management tasks can be performed responsive to determine the language, such as perform optical character recognition (OCR) or derive insights into the text, for example.

Many language detection methods may be natural language processing (NLP) based, and as such methods may assume that inputs are text-based documents. However, such methods may be unable to identify a language in instances where the document is image-based (e.g., scanned documents, photocopies, etc.). In contrast, the present embodiments can implement a computer-vision-based technique to identify languages from image-based documents. Particularly, the present embodiments can implement a fully automated pipeline which includes a series of models (e.g., a bbox detection model, a script classification model, a script-wise text recognition model, and an intra-script language classification model). The models can include, without limitation, deep learning-based models that can detect text, classify a script associated with the text, and identify languages associated with the text as described herein.

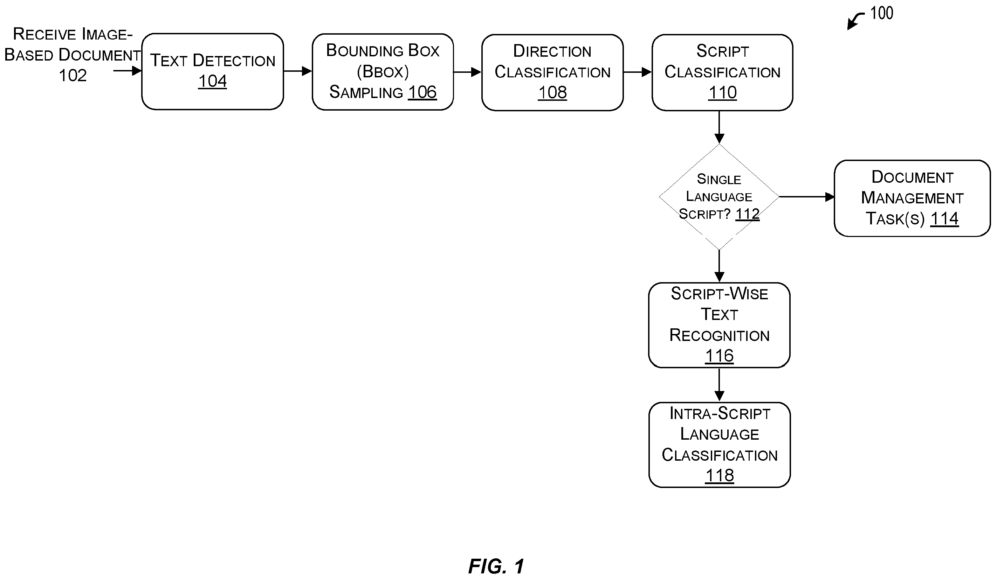

FIG. 1 is an example flow diagram 100 for detecting a native language in an image-based document. A cloud infrastructure node (e.g., one or more interconnected computing devices implementing a cloud infrastructure) can perform the processing tasks as described herein.

At 102, an image-based document is received. For instance, a document can be electronically scanned using a scanning module. The scanned document can be uploaded to the cloud infrastructure node for processing. In many instances, a plurality of image-based documents can be provided to the cloud infrastructure node, and a native language can be identified for each received document.

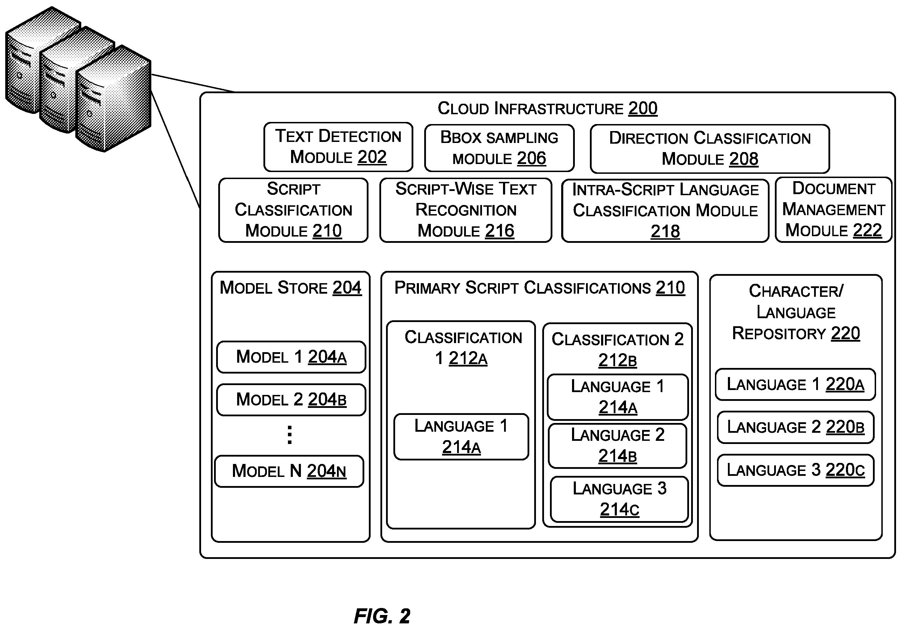

At 104, the image-based document is processed to detect text in the document. A bbox detection module can use the image-based document as an input and output text lines bounded by a corresponding bounding box (bbox). For instance, the bbox detection module (e.g., text detection module 202 shown in FIG. 2) can include implementing a deep learning structure (e.g., a deep broad network (DBNet)) interacting with a multi-layer convolutional neural network (ResNet-18) to detect text in the document. The bbox detection module can provide a neural network that predicts a probability of each pixel being text. Further, the bbox detection module can compare each pixel with a threshold value to segment text areas in the image-based document.

A bbox bounds each text line and specifies a location/size of the text line in the image-based document and a position of the bbox in the document. Each bbox includes a quadrilateral denoted by four corner points ([*x*₁, *y*₁], [*x*₂, *y*₂], [*x*₃, *y*₃], [*x*₄, *y*₄]), where *xᵢ* and *yᵢ* are the x-coordinates (along the writing direction) and y-coordinates, respectively. *i* = 1,2,3,4 denote the clockwise order of the four corner points: top-left, top-right, bottom-left, bottom-right. The bbox can specify a length/width of the text line in the image-based document, and the bbox representation scheme can be interacted with by datasets/models. The cloud infrastructure node can store each of a plurality of text lines (and corresponding bboxes) for each image-based document.

At 106, the bboxes are processed to identify a number of bboxes in the image-based document to be sampled. This can include a bounding box (bbox) sampling module (e.g., bbox sampling module 206 shown in FIG. 2) identifying only a set of bboxes to be sampled. For instance, rather than processing all bboxes (and corresponding text lines) in a document, only the set of bboxes to be sampled are processed, which can result in a reduced computing time and computing resources required to determine a script classification and native language as described herein.

Determining a number of bboxes to sample includes determining a length and a width of each bbox (e.g., that can identify and capture a length of each corresponding text line). The bboxes can be resized so that each aspect ratio remains the same and each height is normalized to a fixed value, such as a fixed value of 32. A predetermined number of bboxes (e.g., 5, 10, 20, etc.) can be selected based on a width of the bboxes (e.g., specifying a longest text line). Selecting bboxes with a longest length text line for sampling can provide increased accuracy in determining a language of the text due to an increased amount of text included in each bbox to be processed. In some instances, a randomized sampling technique can be utilized to randomly select bboxes for sampling.

In some instances, the document can be scanned and/or uploaded such that the document is rotated from an upright position (e.g., 180 degrees from an upright position). At 108, a direction of the image-based document can be determined to identify whether the document is upright (e.g., the text is displayed upright) or rotated. A direction classification module (e.g., direction classification module 208) can classify whether each text line (areas contained in bboxes) has been rotated and corrects (e.g., rotates back) the document if needed.

For example, in some cases, the positioning of the bboxes may indicate the orientation of the document. Particularly, when the image-based document is rotated, the bbox detection module can locate the text area correctly but may have difficulties in processing the text given the rotated orientation. The direction classification module can detect the orientation of the document and rotate the document to an upright position prior to processing the text. The direction classification module can employ any of a variety of neural network architectures to determine an orientation of the document and/or rotate the document to an upright position, such as a streamlined architecture that uses separable convolutions to construct lightweight deep convolutional neural networks (e.g., a MobileNet architecture).

At 110, a primary script classification is determined. Each primary script classification can include a grouping of one or more languages based on common characteristics between the languages. For instance, a primary script classification can include Latin-based languages (e.g., English, Spanish, German, Italian, Portuguese, etc.) that include common characters, common root words, sentence structure, etc. Other primary script classifications may only have one related language, such as a Chinese primary script classification that is unique only to the Chinese language, for example. Example primary script classifications can include a Latin-based primary script classification, an Arabic primary script classification, a Chinese primary script classification, a Korean primary script classification, etc.

In some instances, if the identified primary script classification corresponds to only one language (e.g., a Korean primary script classification, a Japanese primary script classification), the script classification module may identify the language for the document as the single language that corresponds to the identified primary script classification. In other embodiments, if the identified primary script classification corresponds to multiple languages (e.g., a Latin-based primary script classification), the text lines can be passed to downstream modules for further processing. The script classification module (e.g., script classification module 210) may include a convolutional neural network combined with an attention-based head that can utilize visual information inside the bboxes to determine a script classification as described herein.

At 112, the cloud infrastructure node can determine whether the determined primary script classification is a single-language primary script classification or a multi-language primary script classification.

At 114, responsive to the determined primary script classification having a single-language primary script classification (e.g., a Chinese primary script classification), the identified language for the document can be identified as the language corresponding to the primary script classification (e.g., Chinese). Further, in this example, at 120, one or more document management tasks can be performed. Example document management tasks can include performing OCR, uploading the text for subsequent processing, deriving insights into the text, etc.

At 116, if the determined primary script classification includes a multi-language primary script classification (e.g., a Latin primary script classification), a script-wise text recognition process can be performed. For example, if a script classification model classifies text lines in a document as a Latin script, it still is unknown what language the text comprises (e.g., English, Spanish, or Dutch, for example). To address this problem, the script-wise text recognition model can transcribe the image areas contained in bboxes to text so that further classification can be done from the text. Particularly, the script-wise text recognition module (e.g., script-wise text recognition module 212) can provide the sub-images in bboxes as input and outputs a text string (Unicode sequence) for each sub-image.

The script-wise text recognition module can include multiple neural network models, each of which can handle one type of script classification. In other words, for each script, a neural network model can be implemented to perform script-wise text recognition for that script. The model can include a combination of a convolutional neural network (CNN) and a recurrent neural network (RNN), where the CNN model can extract a sequence of visual features from its input images, and the RNN model can predict a text sequence from the extracted visual features, for example.

At 118, a language of the text determined from the script-wise text recognition process is determined. The intra-script language classification module (e.g., 214) can identify the language of the text outputted from the script-wise text recognition module. The intra-script language classification module includes a RNN architecture, such as a bidirectional long short-term memory (BiLSTM) architecture that can transform a character sequence into a numeric sequence and extract the contextual features and make a prediction of the language. The identified language can be used for document management tasks 120.

### A. SYSTEM OVERVIEW

FIG. 2 illustrates an example language identification system 200. The language identification system 200 can be implemented by one or more computing devices (e.g., 200a-c) capable of performing processing tasks as described herein. As shown in FIG. 2, the language identification system 200 can include a series of modules to detect text in an image-based document and determine a language for the document.

The language identification system 200 can include a bbox detection module 202. The bbox detection module 202 can process each pixel in the image-based document and determine text in the document bounded by bboxes. For instance, each pixel can be processed to determine a value (e.g., a color) for each pixel to determine whether the pixel comprises text. The bbox detection module 202 can further process regions within the document to identify areas comprising text. Further, the bbox detection module 202 can identify pixel(s) with threshold values to segment the text lines in the document.

The bbox detection module 202 can further bound determined text lines by bounding boxes. The bbox detection module 202 can determine bounds of each text line and assign graphical points to each corner of the text line relative to a coordinate space assigned to the image-based document.

The modules as described with respect to the language identification system 200 can implement one or more models stored at a model store 204. The model store 204 can maintain and implement models (e.g., model 1 204A, model 2 204B, model N 204N) for the various modules as described herein. For instance, the model store 204 can maintain a combination of convolutional neural networks (CNNs) and recurrent neural networks (RNNs) for use in detecting text or classifying script classifications as described herein.

The language identification system 200 can include a bbox sampling module 206. The bbox sampling module 206 can process all bboxes bounding text lines in the document to identify a number of bboxes to be sampled. For instance, the bbox sampling module 206 can identify all bboxes in the document and assign an identifier to each bbox. The bbox sampling module 206 can further derive a length and width of each bbox using the graphical points assigned to each bbox. The aspect ratio of each bbox can be modified prior to deriving the length and width of each bbox.

The bbox sampling module 206 can identify a number of boxes with a greatest width metric to identify bboxes containing the longest text lines for increased accuracy in script classification and language detection. The bboxes can be selected according to a predetermined number of bboxes for sampling.

The language identification system 200 can include a direction classification module 208. The direction classification module 208 can determine an orientation of text lines and determine whether the text lines should be rotated to an upright orientation. For instance, the direction classification module 208 process pixels in detected bbox to determine an orientation of text characters represented by these pixels.

As a first example, if the direction classification module 208 determines that a length metric of bboxes is greater than a corresponding width metric by a threshold amount (e.g., indicating that the text lines are running vertically, this can indicate that the document is oriented either 90 or 270 degrees from the upright position. As another example, if the direction classification module 208 determines that left-side boundary points of bboxes are not in-line, this can indicate that the document is inverted, as text lines may generally have left-side boundaries being in-line to one another. In some instances, the direction classification module 208 can identify a current orientation of the document, rotate the document, and process the bboxes to determine if the new orientation of the document is upright.

A script classification module 210 can process pixels included in the text lines to determine a primary script classification for the text line. As described above, each primary script classification can specify a grouping of one or more languages with characteristics common to the one or more languages. Example primary script classifications can include Latin (e.g., English, Spanish, German, etc.), Arabic, Chinese, Korean, Japanese, etc. For example, script and language information 216 can include a listing primary script classifications that are stored at the language identification system 200 and accessed by the script classification module 210. Further, the primary script classifications can include multiple classifications. Further, a first classification can contain unique characteristics to one language (e.g., language 1) (e.g., Chinese, Korean). In this example, a second classification can group multiple languages, such as a Latin-based primary script classification. The script classification module 210 can obtain details relating to the primary script classifications for use in identifying a primary script classification that corresponds to the text in the document.

The script classification module 210 can process pixels in text lines in the sampled bboxes to determine a primary script language. For instance, module 210 can be implemented as a trainable neural network models to calculate an index to the primary script language from pixel values. The script classification module 210 can identify a primary script classification based on each text line and assign a confidence level for each text line specifying a confidence of the text line as corresponding to the primary script classification.

In some instances, a text line can include multiple script types. For example, a text line can include Latin-based text and Japanese-based text. In such instances, the script classification module 210 can identify both script types (e.g., Latin-based text and Japanese-based text). Further, the script classification module 210 can assign a script classification for the text line based on an amount of text of each script type and assign a confidence level for the assigned script classification.

Further, in some embodiments, the script classification module 210 can aggregate script classifications derived for each text line to be sampled to derive a primary script classification for the document. For instance, in a document that includes 10 text lines to be sampled, 8 of which are determined as Latin-based scripts and 2 comprise a Chinese script. In this example, since a greatest number of determined primary script classifications comprises a Latin-based classification, the document can be associated with a Latin primary script classification. In some instances, the primary script classification can be identified for each text line, and a language for each text line to be sampled (or every detected text line) can be identified.

The script classification module 210 can determine if the identified primary script classification is a single language script (e.g., Chinese) or a multi-language script (e.g., Latin-based languages). In the event the identified primary script classification is a single language script, the text lines in the document can be processed using techniques as described with the document management module 222. If the identified primary script classification is a multi-language script, the selected bboxes to be sampled can be passed to a downstream script-wise text recognition module 212.

The script-wise text recognition module 212 can process the text lines in corresponding bboxes to be sampled to derive text (e.g., Unicode) in the text lines. The script-wise text recognition model can transcribe the image areas contained in bboxes to text to allow for further classification using the transcribed text. The script-wise text recognition module 212 can transcribe the text lines according to the primary script classification identified by script classification module 210.

The intra-script language classification module 214 can process the identified text from the script-wise text recognition module 212 and identify a language for each text line included in the set of bboxes to be sampled. The intra-script language classification module 214 can access a character/language repository included in script and language information 216 that includes character/word/language style data for a plurality of languages. The intra-script language classification module 214 can compare identified characters/words in the identified text with language data included in the character/language repository to associate each character/word with a language.

As an example, a set of text lines can be identified as a Latin-based primary script classification. In a first instance, if a detected character comprises an umlaut (e.g., ü), the intra-script language classification module 214 can compare the character with language data to identify the Latin-based languages that utilize such a character in their language, such as the German language. In another instance, a detected word can include "cabeza," and the intra-script language classification module 214 can compare the word with entries in the character/language repository (e.g., in script and language information 216) to identify an entry in a set of Spanish language data, determining that the word "cabeza" is most likely a Spanish term.

The intra-script language classification module 214 can identify a corresponding language for each character/word in each text line and derive a primary language for each text line. For instance, this can include aggregating identified language(s) for each character/word and identifying a corresponding language for each text line by determining a language most commonly identified with characters/words in the text line. As an example, the intra-script language classification module 214 can process a total of ten characters/words included in a text line to identify eight instances of the English language and 2 instances of the Spanish language corresponding to the text line. In this example, the intra-script language classification module 214 can then identify that the text line corresponds with the English language based on the aggregated instances of the text line corresponding with the English language.

In some embodiments, a confidence level can be assigned to each text line, specifying a confidence in the accuracy of the text line corresponding with an identified language. For example, if the intra-script language classification module 214 determines that the text includes both English and Spanish words/characters, the language for the text line can be assigned a confidence level based on the estimated accuracy in the text line comprising English or Spanish. The confidence level can be derived based on a number of instances of the intra-script language classification module 214 determining that a word/character in the text comprising a specific language. The intra-script language classification module 214 can determine the language for the document based on the determined language(s) for each text line (e.g., by identifying a greatest number of determined instances for the text lines).

### B. EXAMPLE METHOD FOR IDENTIFYING A LANGUAGE OF TEXT INCLUDED IN AN IMAGE-BASED DOCUMENT

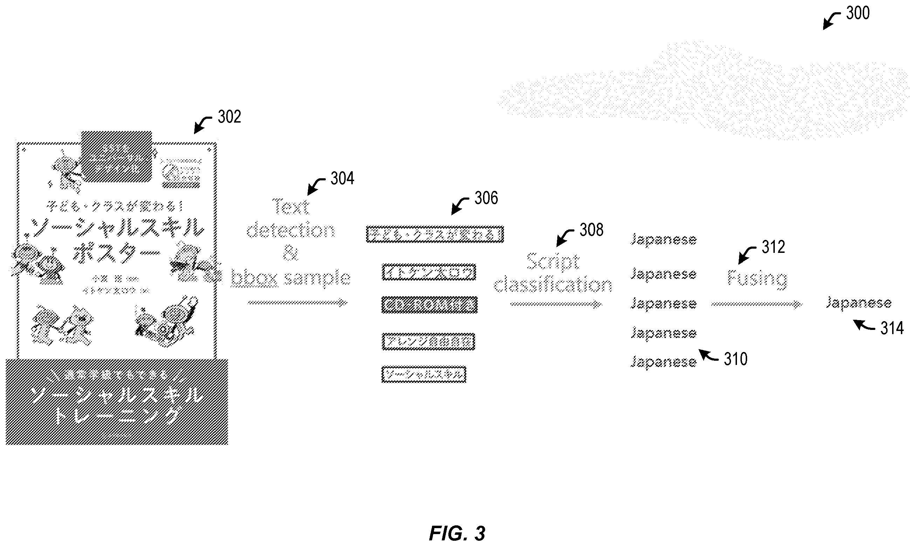

FIG. 3 is a flow diagram of an example method 300 performed by a cloud infrastructure node for identifying a language of text included in an image-based document.

At 302, the method can include receiving an image-based document. For instance, this can include a scanning module electronically scanning a document to generate the image-based document. The image-based document can be forwarded from the scanning module to the cloud infrastructure node.

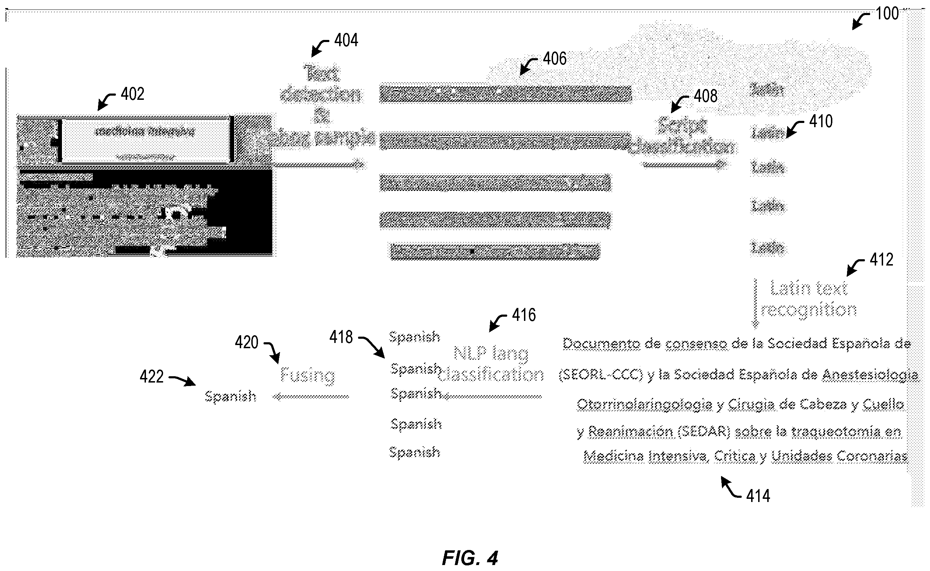

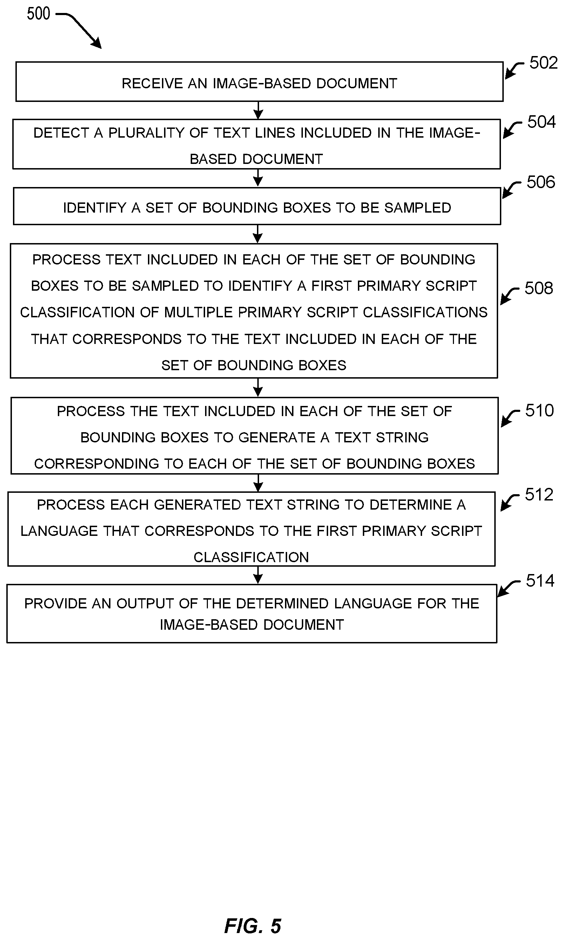

For example, as shown in FIG. 4, an image-based document 402 can be obtained. In the example as shown in FIG. 4, the image-based document 402 can include a series of text lines in a Japanese language and a number of images. Similarly, in FIG. 5, an image-based document 502 can include a series of text lines in a Spanish language.

At 304, the method can include detecting a plurality of text lines included in the image-based document. Each of the plurality of text lines can be bounded by a bounding box specifying a position of each of the plurality of text lines in the image-based document. For instance, pixels in the image-based document can be processed to identify text characters and lines of text in the image-based document. This can include predicting a probability of each pixel in the image-based document comprising text to efficiently identify portions of the image-based document comprising text lines. The plurality of text lines included in the image-based document can be detected using a distributed brokered networking (DBNet) neural network model using a multi-layer convolutional neural network model backbone.

In some instances, each bounding box can include a set of coordinates corresponding to each corner of the bounding box specifying a position of each bounding box relative to a coordinate plane for the image-based document. This can include identifying an outer bound of a text area by processing pixels included in the image-based document and assigning a first coordinate point of the set of coordinates specifying the outer bound of the bounding box relative to the coordinate plane for the image-based document.

At 306, the method can include identifying a set of bounding boxes to be sampled. This can include deriving a length value and a width value using the set of coordinates for each bounding box and selecting the set of bounding boxes as bounding boxes with a greatest width value. Sampling bounding boxes with a greatest width values can identify corresponding text lines with a greatest amount of text for processing.

For example, as shown in FIG. 4, five text lines bounded by bboxes 406 from the image-based document 402 can be sampled. Similarly, in FIG. 5, five text lines bounded by bboxes 506 from the image-based document 502 can be sampled.

At 308, the method can include processing text included in each of the set of bounding boxes to be sampled to identify a first primary script classification of multiple primary script classifications that corresponds to the text included in each of the set of bounding boxes. For example, as shown in FIG. 4, five text lines bounded by bboxes 406 can be processed to identify a primary script classification (e.g., Japanese 410). In this example, as the primary script classification (Japanese) is a single-language script classification, the identified language 414 can comprise Japanese. As another example, in FIG. 5, five text lines bounded by bboxes 506 can be processed to identify a primary script classification (e.g., Latin 510). In this example, as the primary script classification (Latin) is a multi-language script classification, the text lines 506 can be further processed to determine a language for each text line 506 as described herein.

Each of the multiple primary script classifications can correspond to one or more languages. For example, a primary script classification can include a Chinese classification that corresponds to only the Chinese language due to characteristics common only to the Chinese language. A Chinese-based primary script classification can include a single-language script classification. As another example, a primary script classification can include a Latin-based script classification that corresponds to a plurality of language with common characteristics (e.g., English, Spanish, French, German, etc.). A Latin-based script classification can include a multi-language script classification as described herein.

In some instances, responsive to determining that the first primary script classification corresponds to only one language (e.g., a single-language script classification), the method can include providing the output of the identified language for the image-based document as the one language associated with the first primary script classification. For example, if the first primary script classification includes a Chinese classification that corresponds to only the Chinese language, the language of the image-based document can be identified as Chinese. The first primary script classification can be identified by a convolutional neural network model extracting a sequence of visual features from the image-based document and a recurrent neural network model predicting a text sequence from the extracted sequence of visual features.

In some instances, processing the text included in each of the set of bounding boxes to be sampled to identify the first primary script classification can include identifying, for each text line included in each of the set of bounding boxes, a text line primary script classification identifying a primary script classification for each text line. Each identified text line primary script classification for each text line can be aggregated. The first primary script classification can be identified as a primary script classification with a greatest number of aggregated identified text line primary script classification instances for text lines included in each of the set of bounding boxes. For instance, in the example as illustrated in FIG. 4, text lines 406 can be processed to identify a number of primary script classifications (e.g., Japanese 410) for each text line 306. In this example, the number of primary script classifications (e.g., Japanese 410) for each text line 406 can be aggregated to derive a primary script classification for the document (e.g., Japanese 414).

At 310, the method can include processing the text included in each of the set of bounding boxes to generate a text string corresponding to each of the set of bounding boxes. This can be performed responsive to determining that the first primary script classification corresponds to more than one language. The text string can include a Unicode format. For example, as shown in FIG. 5, a series of text strings 514 can be generated based on identifying the script comprises a Latin-based language.

At 312, the method can include processing each generated text string to determine a language that corresponds to the first primary script classification. The determined language for the image-based document can be determined using a bi-directional long short-term memory (LSTM) neural network model comprising an embedding layer to transform a character sequence of each text line into a numeric sequence and bi-directional LSTM layers extracting contextual features in the numeric sequence to determine the language for each text line.

At 314, a language for the image-based document can be identified based on the identified languages for each text string. For instance, a language most commonly identified from the text strings can comprise the language for the image-based document. For example, as shown in FIG. 5, the series of text strings 514 can be processed to identify a language (e.g., Spanish 518) for each text line. The identified language for each text line can be fused (e.g., 520) to identify a language for the image-based document (e.g., 522).

At 316, the method can include providing an output of the determined language for the image-based document. The cloud infrastructure node can associate the image-based document with the determined language. Subsequent processing can be performed responsive to determining the language for the image-based document, such as perform an OCR process, derive features/insights from the text in the document, arrange text in the document for storage in one or more storage modules in the cloud infrastructure, etc.

### C. EXAMPLES FOR IDENTIFYING A LANGUAGE ASSOCIATED WITH IMAGE-BASED DOCUMENTS

FIG. 4 provides a first example illustration 400 for identifying a language for an image-based document. In the example as shown in FIG. 4, an image-based document 402 can be obtained (e.g., from a scanning module electronically scanning the document).

At 404, the cloud infrastructure can perform a bbox detection process (e.g., 104) and a bbox sampling process (e.g., 106) to the image-based document 402. For instance, the image-based document 402 comprising text and images, the bbox detection model (e.g., 202) can implement a deep learning model to identify text lines and bounding boxes (bboxes) 406 to be processed. Further, bboxes can be processed (by a bbox sampling module 206) to identify a set of bboxes 406 to be processed. The bboxes 406 to be sampled can be identified as the bboxes with a greatest length (e.g., providing the greatest amount of text for processing).

At 408, the set of bboxes to be sampled 406 can be processed to identify a primary script classification 410 for each text line. For example, each text line can include Japanese characters and the script classification module (e.g., 210) can identify the characters as corresponding to a Japanese primary script classification.

As shown in FIG. 4, a text line can include multiple script types, such as a Latin-based script (e.g., "CD-ROM") and Japanese characters. In such instances, the script classification module 210 can identify that the text line includes multiple script classifications (e.g., Latin-based classification and a Japanese classification). The script classification module 210 can identify both classifications as assigned to the text line for use is identifying a primary script classification for the image-based document.

The script classification module 210 can aggregate (e.g., fusing 412) all primary script classifications 410 for each text line and derive a primary script classification (e.g., Japanese 414) for the image-based document. Further, the script classification module 210 can determine whether the primary script classification (e.g., Japanese 414) is a single-language classification or a multi-language classification. In this example, the script classification module 210 can identify that a Japanese primary script classification is a single-language classification (e.g., a primary script classification relating only to the Japanese language). Responsive to determining that the primary script classification (e.g., Japanese 414) is a single-language classification, the image-based document can be identified as Japanese.

FIG. 5 provides a second example illustration 500 for identifying a language for an image-based document. At 502, a cloud infrastructure node or other computer system, receives an image-based document. At 504, the cloud infrastructure node or other computer system can perform a bbox-based text detection process (e.g., 104) and a bbox sampling process (e.g., 106) to the image-based document 502. Further, bboxes can be processed (by a bbox sampling module 206) to identify a set of bboxes 506 to be processed. It is noted that some steps in FIG. 5 can be done in a different order or simultaneously with other steps.

At 508, the set of bboxes to be sampled 306 can be processed to identify a primary script classification 510 for each text line. For example, each text line can include Latin-based characters and the script classification module (e.g., 210) can identify the characters as corresponding to a Latin-based primary script classification.

The script classification module 210 can aggregate (e.g., fusing 512) all primary script classifications 510 for each text line and derive a primary script classification (e.g., Latin-based script) for the image-based document. In this example, the script classification module 210 can identify that a Latin-based primary script classification is a multi-language classification (e.g., a primary script classification relating to multiple languages). Responsive to determining that the primary script classification (e.g., Latin) is a multi-language classification, the text lines (e.g., 514) can be passed to script-wise text recognition module 212 to process the text lines into another format (e.g., Unicode).

The intra-script language classification module 214 can process the detected text and identify a language associated with each text line 514. For instance, this can include performing a natural language processing (NLP) language classification process to determine that each text line comprises Spanish (e.g., 518). The language identification instances (e.g., Spanish 518) can be aggregated (e.g., fused 520) to identify a language for the image-based document (e.g., Spanish 522).

### D. IaaS Overview

As noted above, infrastructure as a service (IaaS) is one particular type of cloud computing. IaaS can be configured to provide virtualized computing resources over a public network (e.g., the Internet). In an IaaS model, a cloud computing provider can host the infrastructure components (e.g., servers, storage devices, network nodes (e.g., hardware), deployment software, platform virtualization (e.g., a hypervisor layer), or the like). In some cases, an IaaS provider may also supply a variety of services to accompany those infrastructure components (e.g., billing, monitoring, logging, load balancing and clustering, etc.). Thus, as these services may be policy-driven, IaaS users may be able to implement policies to drive load balancing to maintain application availability and performance.

In some instances, IaaS customers may access resources and services through a wide area network (WAN), such as the Internet, and can use the cloud provider's services to install the remaining elements of an application stack. For example, the user can log in to the IaaS platform to create virtual machines (VMs), install operating systems (OSs) on each VM, deploy middleware such as databases, create storage buckets for workloads and backups, and even install enterprise software into that VM. Customers can then use the provider's services to perform various functions, including balancing network traffic, troubleshooting application issues, monitoring performance, managing disaster recovery, etc.

In most cases, a cloud computing model will require the participation of a cloud provider. The cloud provider may, but need not be, a third-party service that specializes in providing (e.g., offering, renting, selling) IaaS. An entity might also opt to deploy a private cloud, becoming its own provider of infrastructure services.

In some examples, IaaS deployment is the process of putting a new application, or a new version of an application, onto a prepared application server or the like. It may also include the process of preparing the server (e.g., installing libraries, daemons, etc.). This is often managed by the cloud provider, below the hypervisor layer (e.g., the servers, storage, network hardware, and virtualization). Thus, the customer may be responsible for handling (OS), middleware, and/or application deployment (e.g., on self-service virtual machines (e.g., that can be spun up on demand) or the like.

In some examples, IaaS provisioning may refer to acquiring computers or virtual hosts for use, and even installing needed libraries or services on them. In most cases, deployment does not include provisioning, and the provisioning may need to be performed first.

In some cases, there are two different challenges for IaaS provisioning. First, there is the initial challenge of provisioning the initial set of infrastructure before anything is running. Second, there is the challenge of evolving the existing infrastructure (e.g., adding new services, changing services, removing services, etc.) once everything has been provisioned. In some cases, these two challenges may be addressed by enabling the configuration of the infrastructure to be defined declaratively. In other words, the infrastructure (e.g., what components are needed and how they interact) can be defined by one or more configuration files. Thus, the overall topology of the infrastructure (e.g., what resources depend on which, and how they each work together) can be described declaratively. In some instances, once the topology is defined, a workflow can be generated that creates and/or manages the different components described in the configuration files.

In some examples, an infrastructure may have many interconnected elements. For example, there may be one or more virtual private clouds (VPCs) (e.g., a potentially on-demand pool of configurable and/or shared computing resources), also known as a core network. In some examples, there may also be one or more inbound/outbound traffic group rules provisioned to define how the inbound and/or outbound traffic of the network will be set up and one or more virtual machines (VMs). Other infrastructure elements may also be provisioned, such as a load balancer, a database, or the like. As more and more infrastructure elements are desired and/or added, the infrastructure may incrementally evolve.

In some instances, continuous deployment techniques may be employed to enable deployment of infrastructure code across various virtual computing environments. Additionally, the described techniques can enable infrastructure management within these environments. In some examples, service teams can write code that is desired to be deployed to one or more, but often many, different production environments (e.g., across various different geographic locations, sometimes spanning the entire world). However, in some examples, the infrastructure on which the code will be deployed may first need (or, alternatively, be desired/expected) to be set up. In some instances, the provisioning can be done manually, a provisioning tool may be utilized to provision the resources, and/or deployment tools may be utilized to deploy the code once the infrastructure is provisioned.

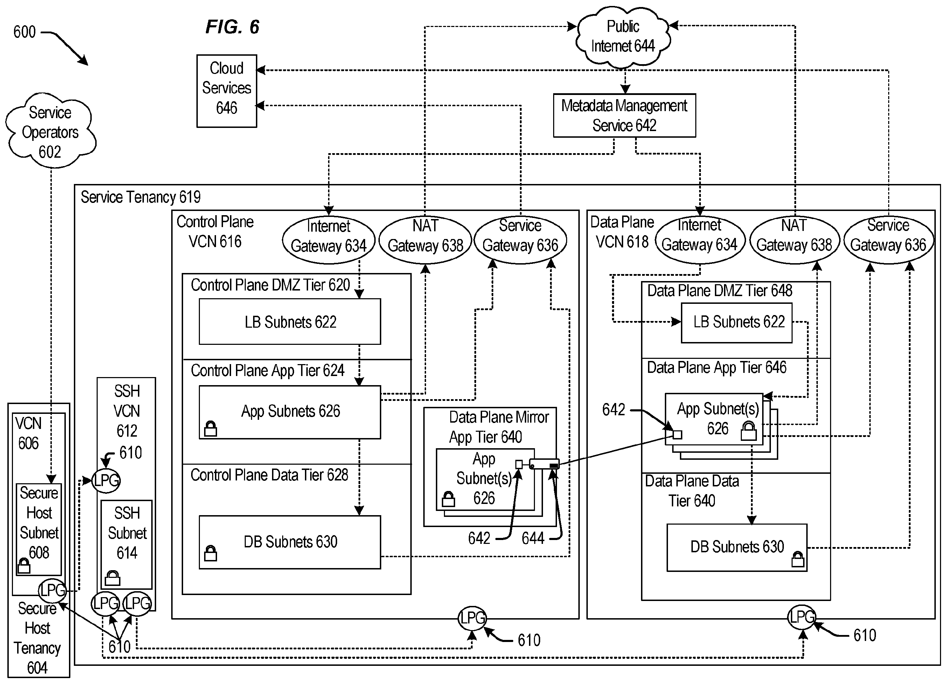

FIG. 6 is a block diagram 600 illustrating an example pattern of an IaaS architecture, according to at least one embodiment. Service operators 602 can be communicatively coupled to a secure host tenancy 604 that can include a virtual cloud network (VCN) 606 and a secure host subnet 608. In some examples, the service operators 602 may be using one or more client computing devices, which may be portable handheld devices (e.g., an iPhone^{®}, cellular telephone, an iPad^{®}, computing tablet, a personal digital assistant (PDA)) or wearable devices (e.g., a Google Glass^{®} head mounted display), running software such as Microsoft Windows Mobile^{®}, and/or a variety of mobile operating systems such as iOS, Windows Phone, Android, BlackBerry 8, Palm OS, and the like, and being Internet, e-mail, short message service (SMS), Blackberry^{®}, or other communication protocol enabled. Alternatively, the client computing devices can be general purpose personal computers including, by way of example, personal computers and/or laptop computers running various versions of Microsoft Windows^{®}, Apple Macintosh^{®}, and/or Linux operating systems. The client computing devices can be workstation computers running any of a variety of commercially-available UNIX^{®} or UNIX-like operating systems, including without limitation the variety of GNU/Linux operating systems, such as for example, Google Chrome OS. Alternatively, or in addition, client computing devices may be any other electronic device, such as a thin-client computer, an Internet-enabled gaming system (e.g., a Microsoft Xbox gaming console with or without a Kinect^{®} gesture input device), and/or a personal messaging device, capable of communicating over a network that can access the VCN 606 and/or the Internet.

The VCN 606 can include a local peering gateway (LPG) 610 that can be communicatively coupled to a secure shell (SSH) VCN 612 via an LPG 610 contained in the SSH VCN 612. The SSH VCN 612 can include an SSH subnet 614, and the SSH VCN 612 can be communicatively coupled to a control plane VCN 616 via the LPG 610 contained in the control plane VCN 616. Also, the SSH VCN 612 can be communicatively coupled to a data plane VCN 618 via an LPG 610. The control plane VCN 616 and the data plane VCN 618 can be contained in a service tenancy 619 that can be owned and/or operated by the IaaS provider.

The control plane VCN 616 can include a control plane demilitarized zone (DMZ) tier 620 that acts as a perimeter network (e.g., portions of a corporate network between the corporate intranet and external networks). The DMZ-based servers may have restricted responsibilities and help keep breaches contained. Additionally, the DMZ tier 620 can include one or more load balancer (LB) subnet(s) 622, a control plane app tier 624 that can include app subnet(s) 626, a control plane data tier 628 that can include database (DB) subnet(s) 630 (e.g., frontend DB subnet(s) and/or backend DB subnet(s)). The LB subnet(s) 622 contained in the control plane DMZ tier 620 can be communicatively coupled to the app subnet(s) 626 contained in the control plane app tier 624 and an Internet gateway 634 that can be contained in the control plane VCN 616, and the app subnet(s) 626 can be communicatively coupled to the DB subnet(s) 630 contained in the control plane data tier 628 and a service gateway 636 and a network address translation (NAT) gateway 638. The control plane VCN 616 can include the service gateway 636 and the NAT gateway 638.

The control plane VCN 616 can include a data plane mirror app tier 640 that can include app subnet(s) 626. The app subnet(s) 626 contained in the data plane mirror app tier 640 can include a virtual network interface controller (VNIC) 642 that can execute a compute instance 644. The compute instance 644 can communicatively couple the app subnet(s) 626 of the data plane mirror app tier 640 to app subnet(s) 626 that can be contained in a data plane app tier 646.

The data plane VCN 618 can include the data plane app tier 646, a data plane DMZ tier 648, and a data plane data tier 650. The data plane DMZ tier 648 can include LB subnet(s) 622 that can be communicatively coupled to the app subnet(s) 626 of the data plane app tier 646 and the Internet gateway 634 of the data plane VCN 618. The app subnet(s) 626 can be communicatively coupled to the service gateway 636 of the data plane VCN 618 and the NAT gateway 638 of the data plane VCN 618. The data plane data tier 650 can also include the DB subnet(s) 630 that can be communicatively coupled to the app subnet(s) 626 of the data plane app tier 646.

The Internet gateway 634 of the control plane VCN 616 and of the data plane VCN 618 can be communicatively coupled to a metadata management service 652 that can be communicatively coupled to public Internet 654. Public Internet 654 can be communicatively coupled to the NAT gateway 638 of the control plane VCN 616 and of the data plane VCN 618. The service gateway 636 of the control plane VCN 616 and of the data plane VCN 618 can be communicatively couple to cloud services 656.

In some examples, the service gateway 636 of the control plane VCN 616 or of the data plane VCN 618 can make application programming interface (API) calls to cloud services 656 without going through public Internet 654. The API calls to cloud services 656 from the service gateway 636 can be one-way: the service gateway 636 can make API calls to cloud services 656, and cloud services 656 can send requested data to the service gateway 636. But, cloud services 656 may not initiate API calls to the service gateway 636.

In some examples, the secure host tenancy 604 can be directly connected to the service tenancy 619, which may be otherwise isolated. The secure host subnet 608 can communicate with the SSH subnet 614 through an LPG 610 that may enable two-way communication over an otherwise isolated system. Connecting the secure host subnet 608 to the SSH subnet 614 may give the secure host subnet 608 access to other entities within the service tenancy 619.

The control plane VCN 616 may allow users of the service tenancy 619 to set up or otherwise provision desired resources. Desired resources provisioned in the control plane VCN 616 may be deployed or otherwise used in the data plane VCN 618. In some examples, the control plane VCN 616 can be isolated from the data plane VCN 618, and the data plane mirror app tier 640 of the control plane VCN 616 can communicate with the data plane app tier 646 of the data plane VCN 618 via VNICs 642 that can be contained in the data plane mirror app tier 640 and the data plane app tier 646.

In some examples, users of the system, or customers, can make requests, for example create, read, update, or delete (CRUD) operations, through public Internet 654 that can communicate the requests to the metadata management service 652. The metadata management service 652 can communicate the request to the control plane VCN 616 through the Internet gateway 634. The request can be received by the LB subnet(s) 622 contained in the control plane DMZ tier 620. The LB subnet(s) 622 may determine that the request is valid, and in response to this determination, the LB subnet(s) 622 can transmit the request to app subnet(s) 626 contained in the control plane app tier 624. If the request is validated and requires a call to public Internet 654, the call to public Internet 654 may be transmitted to the NAT gateway 638 that can make the call to public Internet 654. Memory that may be desired to be stored by the request can be stored in the DB subnet(s) 630.

In some examples, the data plane mirror app tier 640 can facilitate direct communication between the control plane VCN 616 and the data plane VCN 618. For example, changes, updates, or other suitable modifications to configuration may be desired to be applied to the resources contained in the data plane VCN 618. Via a VNIC 642, the control plane VCN 616 can directly communicate with, and can thereby execute the changes, updates, or other suitable modifications to configuration to, resources contained in the data plane VCN 618.

In some embodiments, the control plane VCN 616 and the data plane VCN 618 can be contained in the service tenancy 619. In this case, the user, or the customer, of the system may not own or operate either the control plane VCN 616 or the data plane VCN 618. Instead, the IaaS provider may own or operate the control plane VCN 616 and the data plane VCN 618, both of which may be contained in the service tenancy 619. This embodiment can enable isolation of networks that may prevent users or customers from interacting with other users', or other customers', resources. Also, this embodiment may allow users or customers of the system to store databases privately without needing to rely on public Internet 654, which may not have a desired level of threat prevention, for storage.

In other embodiments, the LB subnet(s) 622 contained in the control plane VCN 616 can be configured to receive a signal from the service gateway 636. In this embodiment, the control plane VCN 616 and the data plane VCN 618 may be configured to be called by a customer of the IaaS provider without calling public Internet 654. Customers of the IaaS provider may desire this embodiment since database(s) that the customers use may be controlled by the IaaS provider and may be stored on the service tenancy 619, which may be isolated from public Internet 654.

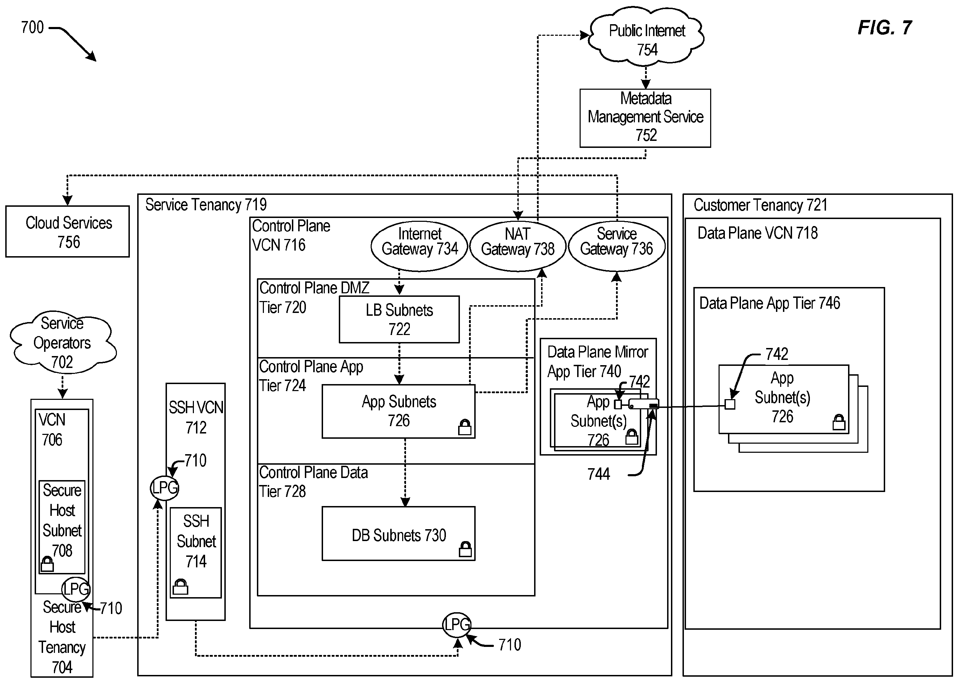

FIG. 7 is a block diagram 700 illustrating another example pattern of an IaaS architecture, according to at least one embodiment. Service operators 702 (e.g., service operators 602 of FIG. 6) can be communicatively coupled to a secure host tenancy 704 (e.g., the secure host tenancy 604 of FIG. 6) that can include a virtual cloud network (VCN) 706 (e.g., the VCN 606 of FIG. 6) and a secure host subnet 708 (e.g., the secure host subnet 608 of FIG. 6). The VCN 706 can include a local peering gateway (LPG) 710 (e.g., the LPG 610 of FIG. 6) that can be communicatively coupled to a secure shell (SSH) VCN 712 (e.g., the SSH VCN 612 of FIG. 6) via an LPG 610 contained in the SSH VCN 712. The SSH VCN 712 can include an SSH subnet 714 (e.g., the SSH subnet 614 of FIG. 6), and the SSH VCN 712 can be communicatively coupled to a control plane VCN 716 (e.g., the control plane VCN 616 of FIG. 6) via an LPG 710 contained in the control plane VCN 716. The control plane VCN 716 can be contained in a service tenancy 719 (e.g., the service tenancy 619 of FIG. 6), and the data plane VCN 718 (e.g., the data plane VCN 618 of FIG. 6) can be contained in a customer tenancy 721 that may be owned or operated by users, or customers, of the system.

The control plane VCN 716 can include a control plane DMZ tier 720 (e.g., the control plane DMZ tier 620 of FIG. 6) that can include LB subnet(s) 722 (e.g., LB subnet(s) 622 of FIG. 6), a control plane app tier 724 (e.g., the control plane app tier 624 of FIG. 6) that can include app subnet(s) 726 (e.g., app subnet(s) 626 of FIG. 6), a control plane data tier 728 (e.g., the control plane data tier 628 of FIG. 6) that can include database (DB) subnet(s) 730 (e.g., similar to DB subnet(s) 630 of FIG. 6). The LB subnet(s) 722 contained in the control plane DMZ tier 720 can be communicatively coupled to the app subnet(s) 726 contained in the control plane app tier 724 and an Internet gateway 734 (e.g., the Internet gateway 634 of FIG. 6) that can be contained in the control plane VCN 716, and the app subnet(s) 726 can be communicatively coupled to the DB subnet(s) 730 contained in the control plane data tier 728 and a service gateway 736 (e.g., the service gateway of FIG. 6) and a network address translation (NAT) gateway 738 (e.g., the NAT gateway 638 of FIG. 6). The control plane VCN 716 can include the service gateway 736 and the NAT gateway 738.

The control plane VCN 716 can include a data plane mirror app tier 740 (e.g., the data plane mirror app tier 640 of FIG. 6) that can include app subnet(s) 726. The app subnet(s) 726 contained in the data plane mirror app tier 740 can include a virtual network interface controller (VNIC) 742 (e.g., the VNIC of 642) that can execute a compute instance 744 (e.g., similar to the compute instance 644 of FIG. 6). The compute instance 744 can facilitate communication between the app subnet(s) 726 of the data plane mirror app tier 740 and the app subnet(s) 726 that can be contained in a data plane app tier 746 (e.g., the data plane app tier 646 of FIG. 6) via the VNIC 742 contained in the data plane mirror app tier 740 and the VNIC 742 contained in the data plane app tier 746.

The Internet gateway 734 contained in the control plane VCN 716 can be communicatively coupled to a metadata management service 752 (e.g., the metadata management service 652 of FIG. 6) that can be communicatively coupled to public Internet 754 (e.g., public Internet 654 of FIG. 6). Public Internet 754 can be communicatively coupled to the NAT gateway 738 contained in the control plane VCN 716. The service gateway 736 contained in the control plane VCN 716 can be communicatively couple to cloud services 756 (e.g., cloud services 656 of FIG. 6).

In some examples, the data plane VCN 718 can be contained in the customer tenancy 721. In this case, the IaaS provider may provide the control plane VCN 716 for each customer, and the IaaS provider may, for each customer, set up a unique compute instance 744 that is contained in the service tenancy 719. Each compute instance 744 may allow communication between the control plane VCN 716, contained in the service tenancy 719, and the data plane VCN 718 that is contained in the customer tenancy 721. The compute instance 744 may allow resources, that are provisioned in the control plane VCN 716 that is contained in the service tenancy 719, to be deployed or otherwise used in the data plane VCN 718 that is contained in the customer tenancy 721.

In other examples, the customer of the IaaS provider may have databases that live in the customer tenancy 721. In this example, the control plane VCN 716 can include the data plane mirror app tier 740 that can include app subnet(s) 726. The data plane mirror app tier 740 can reside in the data plane VCN 718, but the data plane mirror app tier 740 may not live in the data plane VCN 718. That is, the data plane mirror app tier 740 may have access to the customer tenancy 721, but the data plane mirror app tier 740 may not exist in the data plane VCN 718 or be owned or operated by the customer of the IaaS provider. The data plane mirror app tier 740 may be configured to make calls to the data plane VCN 718 but may not be configured to make calls to any entity contained in the control plane VCN 716. The customer may desire to deploy or otherwise use resources in the data plane VCN 718 that are provisioned in the control plane VCN 716, and the data plane mirror app tier 740 can facilitate the desired deployment, or other usage of resources, of the customer.

In some embodiments, the customer of the IaaS provider can apply filters to the data plane VCN 718. In this embodiment, the customer can determine what the data plane VCN 718 can access, and the customer may restrict access to public Internet 754 from the data plane VCN 718. The IaaS provider may not be able to apply filters or otherwise control access of the data plane VCN 718 to any outside networks or databases. Applying filters and controls by the customer onto the data plane VCN 718, contained in the customer tenancy 721, can help isolate the data plane VCN 718 from other customers and from public Internet 754.

In some embodiments, cloud services 756 can be called by the service gateway 736 to access services that may not exist on public Internet 754, on the control plane VCN 716, or on the data plane VCN 718. The connection between cloud services 756 and the control plane VCN 716 or the data plane VCN 718 may not be live or continuous. Cloud services 756 may exist on a different network owned or operated by the IaaS provider. Cloud services 756 may be configured to receive calls from the service gateway 736 and may be configured to not receive calls from public Internet 754. Some cloud services 756 may be isolated from other cloud services 756, and the control plane VCN 716 may be isolated from cloud services 756 that may not be in the same region as the control plane VCN 716. For example, the control plane VCN 716 may be located in "Region 1," and cloud service "Deployment 6," may be located in Region 1 and in "Region 2." If a call to Deployment 6 is made by the service gateway 736 contained in the control plane VCN 716 located in Region 1, the call may be transmitted to Deployment 6 in Region 1. In this example, the control plane VCN 716, or Deployment 6 in Region 1, may not be communicatively coupled to, or otherwise in communication with, Deployment 6 in Region 2.

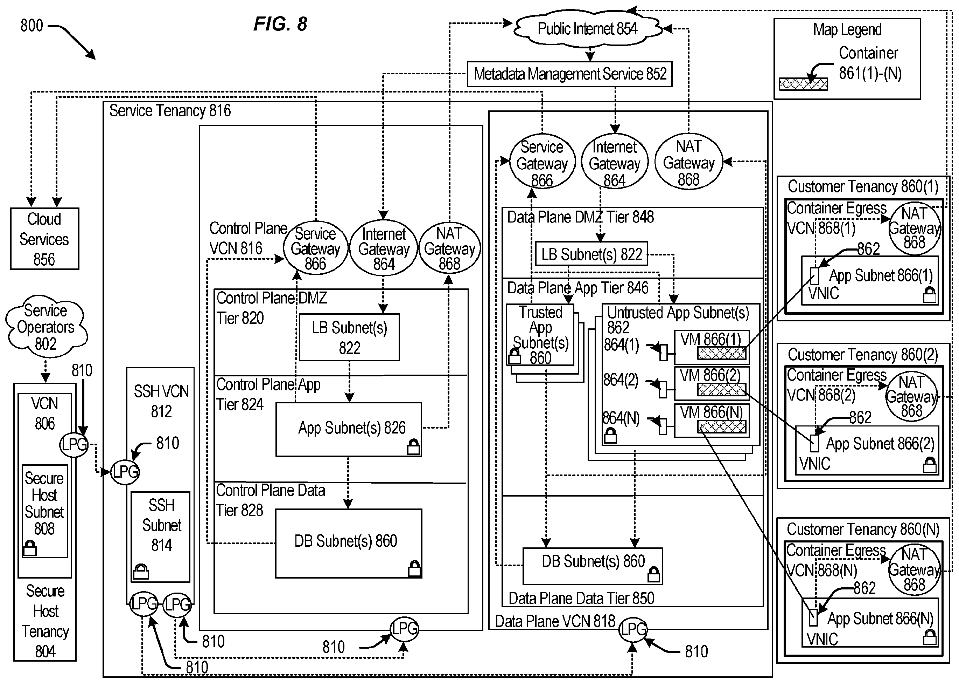

FIG. 8 is a block diagram 800 illustrating another example pattern of an IaaS architecture, according to at least one embodiment. Service operators 802 (e.g., service operators 602 of FIG. 6) can be communicatively coupled to a secure host tenancy 804 (e.g., the secure host tenancy 604 of FIG. 6) that can include a virtual cloud network (VCN) 806 (e.g., the VCN 606 of FIG. 6) and a secure host subnet 808 (e.g., the secure host subnet 608 of FIG. 6). The VCN 806 can include an LPG 810 (e.g., the LPG 610 of FIG. 6) that can be communicatively coupled to an SSH VCN 812 (e.g., the SSH VCN 612 of FIG. 6) via an LPG 810 contained in the SSH VCN 812. The SSH VCN 812 can include an SSH subnet 814 (e.g., the SSH subnet 614 of FIG. 6), and the SSH VCN 812 can be communicatively coupled to a control plane VCN 816 (e.g., the control plane VCN 616 of FIG. 6) via an LPG 810 contained in the control plane VCN 816 and to a data plane VCN 818 (e.g., the data plane 618 of FIG. 6) via an LPG 810 contained in the data plane VCN 818. The control plane VCN 816 and the data plane VCN 818 can be contained in a service tenancy 819 (e.g., the service tenancy 619 of FIG. 6).

The control plane VCN 816 can include a control plane DMZ tier 820 (e.g., the control plane DMZ tier 620 of FIG. 6) that can include load balancer (LB) subnet(s) 822 (e.g., LB subnet(s) 622 of FIG. 6), a control plane app tier 824 (e.g., the control plane app tier 624 of FIG. 6) that can include app subnet(s) 826 (e.g., similar to app subnet(s) 626 of FIG. 6), a control plane data tier 828 (e.g., the control plane data tier 628 of FIG. 6) that can include DB subnet(s) 830. The LB subnet(s) 822 contained in the control plane DMZ tier 820 can be communicatively coupled to the app subnet(s) 826 contained in the control plane app tier 824 and to an Internet gateway 834 (e.g., the Internet gateway 634 of FIG. 6) that can be contained in the control plane VCN 816, and the app subnet(s) 826 can be communicatively coupled to the DB subnet(s) 830 contained in the control plane data tier 828 and to a service gateway 836 (e.g., the service gateway of FIG. 6) and a network address translation (NAT) gateway 838 (e.g., the NAT gateway 638 of FIG. 6). The control plane VCN 816 can include the service gateway 836 and the NAT gateway 838.

The data plane VCN 818 can include a data plane app tier 846 (e.g., the data plane app tier 646 of FIG. 6), a data plane DMZ tier 848 (e.g., the data plane DMZ tier 648 of FIG. 6), and a data plane data tier 850 (e.g., the data plane data tier 650 of FIG. 6). The data plane DMZ tier 848 can include LB subnet(s) 822 that can be communicatively coupled to trusted app subnet(s) 860 and untrusted app subnet(s) 862 of the data plane app tier 846 and the Internet gateway 834 contained in the data plane VCN 818. The trusted app subnet(s) 860 can be communicatively coupled to the service gateway 836 contained in the data plane VCN 818, the NAT gateway 838 contained in the data plane VCN 818, and DB subnet(s) 830 contained in the data plane data tier 850. The untrusted app subnet(s) 862 can be communicatively coupled to the service gateway 836 contained in the data plane VCN 818 and DB subnet(s) 830 contained in the data plane data tier 850. The data plane data tier 850 can include DB subnet(s) 830 that can be communicatively coupled to the service gateway 836 contained in the data plane VCN 818.

The untrusted app subnet(s) 862 can include one or more primary VNICs 864(1)-(N) that can be communicatively coupled to tenant virtual machines (VMs) 866(1)-(N). Each tenant VM 866(1)-(N) can be communicatively coupled to a respective app subnet 867(1)-(N) that can be contained in respective container egress VCNs 868(1)-(N) that can be contained in respective customer tenancies 870(1)-(N). Respective secondary VNICs 872(1)-(N) can facilitate communication between the untrusted app subnet(s) 862 contained in the data plane VCN 818 and the app subnet contained in the container egress VCNs 868(1)-(N). Each container egress VCNs 868(1)-(N) can include a NAT gateway 838 that can be communicatively coupled to public Internet 854 (e.g., public Internet 654 of FIG. 6).

The Internet gateway 834 contained in the control plane VCN 816 and contained in the data plane VCN 818 can be communicatively coupled to a metadata management service 852 (e.g., the metadata management system 652 of FIG. 6) that can be communicatively coupled to public Internet 854. Public Internet 854 can be communicatively coupled to the NAT gateway 838 contained in the control plane VCN 816 and contained in the data plane VCN 818. The service gateway 836 contained in the control plane VCN 816 and contained in the data plane VCN 818 can be communicatively couple to cloud services 856.

In some embodiments, the data plane VCN 818 can be integrated with customer tenancies 870. This integration can be useful or desirable for customers of the IaaS provider in some cases such as a case that may desire support when executing code. The customer may provide code to run that may be destructive, may communicate with other customer resources, or may otherwise cause undesirable effects. In response to this, the IaaS provider may determine whether to run code given to the IaaS provider by the customer.

In some examples, the customer of the IaaS provider may grant temporary network access to the IaaS provider and request a function to be attached to the data plane tier app 846. Code to run the function may be executed in the VMs 866(1)-(N), and the code may not be configured to run anywhere else on the data plane VCN 818. Each VM 866(1)-(N) may be connected to one customer tenancy 870. Respective containers 871(1)-(N) contained in the VMs 866(1)-(N) may be configured to run the code. In this case, there can be a dual isolation (e.g., the containers 871(1)-(N) running code, where the containers 871(1)-(N) may be contained in at least the VM 866(1)-(N) that are contained in the untrusted app subnet(s) 862), which may help prevent incorrect or otherwise undesirable code from damaging the network of the IaaS provider or from damaging a network of a different customer. The containers 871(1)-(N) may be communicatively coupled to the customer tenancy 870 and may be configured to transmit or receive data from the customer tenancy 870. The containers 871(1)-(N) may not be configured to transmit or receive data from any other entity in the data plane VCN 818. Upon completion of running the code, the IaaS provider may kill or otherwise dispose of the containers 871(1)-(N).

In some embodiments, the trusted app subnet(s) 860 may run code that may be owned or operated by the IaaS provider. In this embodiment, the trusted app subnet(s) 860 may be communicatively coupled to the DB subnet(s) 830 and be configured to execute CRUD operations in the DB subnet(s) 830. The untrusted app subnet(s) 862 may be communicatively coupled to the DB subnet(s) 830, but in this embodiment, the untrusted app subnet(s) may be configured to execute read operations in the DB subnet(s) 830. The containers 871(1)-(N) that can be contained in the VM 866(1)-(N) of each customer and that may run code from the customer may not be communicatively coupled with the DB subnet(s) 830.

In other embodiments, the control plane VCN 816 and the data plane VCN 818 may not be directly communicatively coupled. In this embodiment, there may be no direct communication between the control plane VCN 816 and the data plane VCN 818. However, communication can occur indirectly through at least one method. An LPG 810 may be established by the IaaS provider that can facilitate communication between the control plane VCN 816 and the data plane VCN 818. In another example, the control plane VCN 816 or the data plane VCN 818 can make a call to cloud services 856 via the service gateway 836. For example, a call to cloud services 856 from the control plane VCN 816 can include a request for a service that can communicate with the data plane VCN 818.

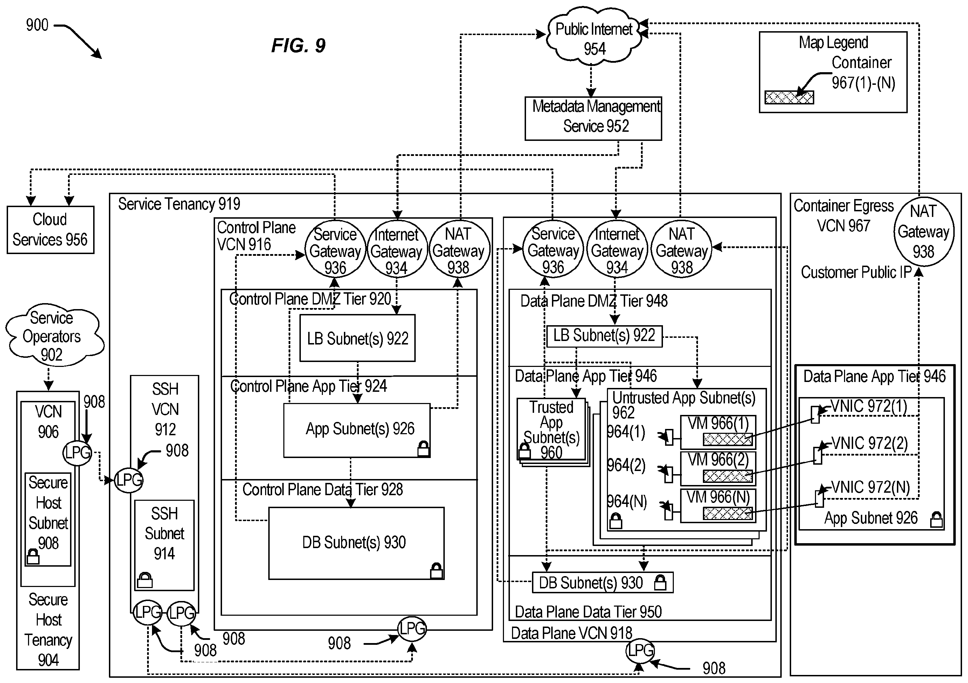

FIG. 9 is a block diagram 900 illustrating another example pattern of an IaaS architecture, according to at least one embodiment. Service operators 902 (e.g., service operators 602 of FIG. 6) can be communicatively coupled to a secure host tenancy 904 (e.g., the secure host tenancy 604 of FIG. 6) that can include a virtual cloud network (VCN) 906 (e.g., the VCN 606 of FIG. 6) and a secure host subnet 908 (e.g., the secure host subnet 608 of FIG. 6). The VCN 906 can include an LPG 910 (e.g., the LPG 610 of FIG. 6) that can be communicatively coupled to an SSH VCN 912 (e.g., the SSH VCN 612 of FIG. 6) via an LPG 910 contained in the SSH VCN 912. The SSH VCN 912 can include an SSH subnet 914 (e.g., the SSH subnet 614 of FIG. 6), and the SSH VCN 912 can be communicatively coupled to a control plane VCN 916 (e.g., the control plane VCN 616 of FIG. 6) via an LPG 910 contained in the control plane VCN 916 and to a data plane VCN 918 (e.g., the data plane 618 of FIG. 6) via an LPG 910 contained in the data plane VCN 918. The control plane VCN 916 and the data plane VCN 918 can be contained in a service tenancy 919 (e.g., the service tenancy 619 of FIG. 6).

The control plane VCN 916 can include a control plane DMZ tier 920 (e.g., the control plane DMZ tier 620 of FIG. 6) that can include LB subnet(s) 922 (e.g., LB subnet(s) 622 of FIG. 6), a control plane app tier 924 (e.g., the control plane app tier 624 of FIG. 6) that can include app subnet(s) 926 (e.g., app subnet(s) 626 of FIG. 6), a control plane data tier 928 (e.g., the control plane data tier 628 of FIG. 6) that can include DB subnet(s) 930 (e.g., DB subnet(s) 830 of FIG. 8). The LB subnet(s) 922 contained in the control plane DMZ tier 920 can be communicatively coupled to the app subnet(s) 926 contained in the control plane app tier 924 and to an Internet gateway 934 (e.g., the Internet gateway 634 of FIG. 6) that can be contained in the control plane VCN 916, and the app subnet(s) 926 can be communicatively coupled to the DB subnet(s) 930 contained in the control plane data tier 928 and to a service gateway 936 (e.g., the service gateway of FIG. 6) and a network address translation (NAT) gateway 938 (e.g., the NAT gateway 638 of FIG. 6). The control plane VCN 916 can include the service gateway 936 and the NAT gateway 938.

The data plane VCN 918 can include a data plane app tier 946 (e.g., the data plane app tier 646 of FIG. 6), a data plane DMZ tier 948 (e.g., the data plane DMZ tier 648 of FIG. 6), and a data plane data tier 950 (e.g., the data plane data tier 650 of FIG. 6). The data plane DMZ tier 948 can include LB subnet(s) 922 that can be communicatively coupled to trusted app subnet(s) 960 (e.g., trusted app subnet(s) 860 of FIG. 8) and untrusted app subnet(s) 962 (e.g., untrusted app subnet(s) 862 of FIG. 8) of the data plane app tier 946 and the Internet gateway 934 contained in the data plane VCN 918. The trusted app subnet(s) 960 can be communicatively coupled to the service gateway 936 contained in the data plane VCN 918, the NAT gateway 938 contained in the data plane VCN 918, and DB subnet(s) 930 contained in the data plane data tier 950. The untrusted app subnet(s) 962 can be communicatively coupled to the service gateway 936 contained in the data plane VCN 918 and DB subnet(s) 930 contained in the data plane data tier 950. The data plane data tier 950 can include DB subnet(s) 930 that can be communicatively coupled to the service gateway 936 contained in the data plane VCN 918.

The untrusted app subnet(s) 962 can include primary VNICs 964(1)-(N) that can be communicatively coupled to tenant virtual machines (VMs) 966(1)-(N) residing within the untrusted app subnet(s) 962. Each tenant VM 966(1)-(N) can run code in a respective container 967(1)-(N), and be communicatively coupled to an app subnet 926 that can be contained in a data plane app tier 946 that can be contained in a container egress VCN 968. Respective secondary VNICs 972(1)-(N) can facilitate communication between the untrusted app subnet(s) 962 contained in the data plane VCN 918 and the app subnet contained in the container egress VCN 968. The container egress VCN can include a NAT gateway 938 that can be communicatively coupled to public Internet 954 (e.g., public Internet 654 of FIG. 6).

The Internet gateway 934 contained in the control plane VCN 916 and contained in the data plane VCN 918 can be communicatively coupled to a metadata management service 952 (e.g., the metadata management system 652 of FIG. 6) that can be communicatively coupled to public Internet 954. Public Internet 954 can be communicatively coupled to the NAT gateway 938 contained in the control plane VCN 916 and contained in the data plane VCN 918. The service gateway 936 contained in the control plane VCN 916 and contained in the data plane VCN 918 can be communicatively couple to cloud services 956.

In some examples, the pattern illustrated by the architecture of block diagram 900 of FIG. 9 may be considered an exception to the pattern illustrated by the architecture of block diagram 800 of FIG. 8 and may be desirable for a customer of the IaaS provider if the IaaS provider cannot directly communicate with the customer (e.g., a disconnected region). The respective containers 967(1)-(N) that are contained in the VMs 966(1)-(N) for each customer can be accessed in real-time by the customer. The containers 967(1)-(N) may be configured to make calls to respective secondary VNICs 972(1)-(N) contained in app subnet(s) 926 of the data plane app tier 946 that can be contained in the container egress VCN 968. The secondary VNICs 972(1)-(N) can transmit the calls to the NAT gateway 938 that may transmit the calls to public Internet 954. In this example, the containers 967(1)-(N) that can be accessed in real-time by the customer can be isolated from the control plane VCN 916 and can be isolated from other entities contained in the data plane VCN 918. The containers 967(1)-(N) may also be isolated from resources from other customers.

In other examples, the customer can use the containers 967(1)-(N) to call cloud services 956. In this example, the customer may run code in the containers 967(1)-(N) that requests a service from cloud services 956. The containers 967(1)-(N) can transmit this request to the secondary VNICs 972(1)-(N) that can transmit the request to the NAT gateway that can transmit the request to public Internet 954. Public Internet 954 can transmit the request to LB subnet(s) 922 contained in the control plane VCN 916 via the Internet gateway 934. In response to determining the request is valid, the LB subnet(s) can transmit the request to app subnet(s) 926 that can transmit the request to cloud services 956 via the service gateway 936.

It should be appreciated that IaaS architectures 600, 700, 800, 900 depicted in the figures may have other components than those depicted. Further, the embodiments shown in the figures are only some examples of a cloud infrastructure system that may incorporate an embodiment of the disclosure. In some other embodiments, the IaaS systems may have more or fewer components than shown in the figures, may combine two or more components, or may have a different configuration or arrangement of components.

In certain embodiments, the IaaS systems described herein may include a suite of applications, middleware, and database service offerings that are delivered to a customer in a self-service, subscription-based, elastically scalable, reliable, highly available, and secure manner. An example of such an IaaS system is the Oracle Cloud Infrastructure (OCI) provided by the present assignee.

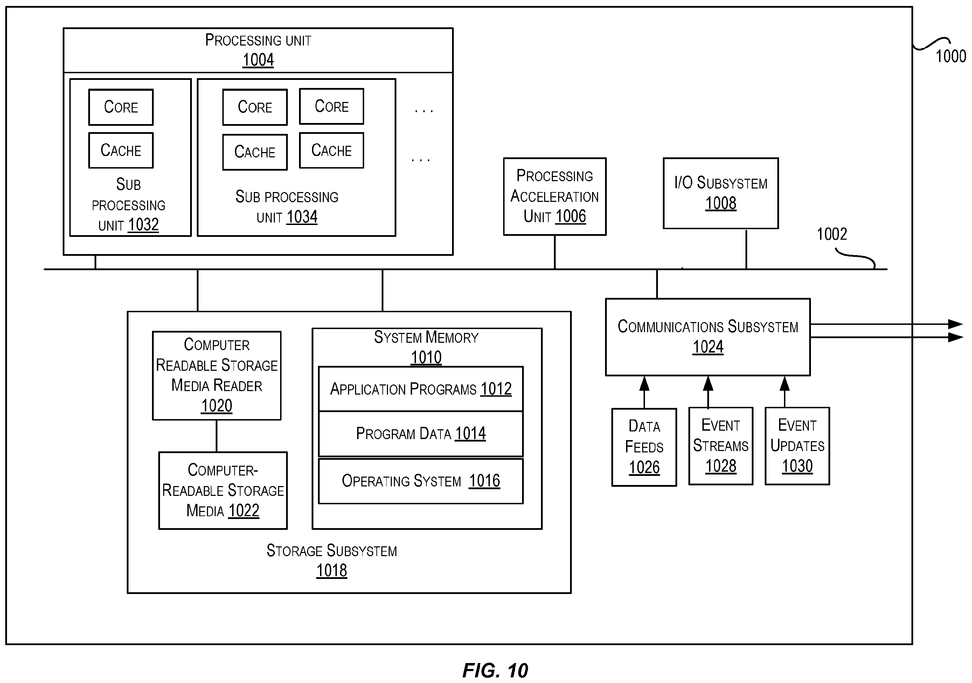

FIG. 10 illustrates an example computer system 1000, in which various embodiments may be implemented. The system 1000 may be used to implement any of the computer systems described above. As shown in the figure, computer system 1000 includes a processing unit 1004 that communicates with a number of peripheral subsystems via a bus subsystem 1002. These peripheral subsystems may include a processing acceleration unit 1006, an I/O subsystem 1008, a storage subsystem 1018 and a communications subsystem 1024. Storage subsystem 1018 includes tangible computer-readable storage media 1022 and a system memory 1010.

Bus subsystem 1002 provides a mechanism for letting the various components and subsystems of computer system 1000 communicate with each other as intended. Although bus subsystem 1002 is shown schematically as a single bus, alternative embodiments of the bus subsystem may utilize multiple buses. Bus subsystem 1002 may be any of several types of bus structures including a memory bus or memory controller, a peripheral bus, and a local bus using any of a variety of bus architectures. For example, such architectures may include an Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus, which can be implemented as a Mezzanine bus manufactured to the IEEE P1386.1 standard.

Processing unit 1004, which can be implemented as one or more integrated circuits (e.g., a conventional microprocessor or microcontroller), controls the operation of computer system 1000. One or more processors may be included in processing unit 1004. These processors may include single core or multicore processors. In certain embodiments, processing unit 1004 may be implemented as one or more independent processing units 1032 and/or 1034 with single or multicore processors included in each processing unit. In other embodiments, processing unit 1004 may also be implemented as a quad-core processing unit formed by integrating two dual-core processors into a single chip.

In various embodiments, processing unit 1004 can execute a variety of programs in response to program code and can maintain multiple concurrently executing programs or processes. At any given time, some or all of the program code to be executed can be resident in processor(s) 1004 and/or in storage subsystem 1018. Through suitable programming, processor(s) 1004 can provide various functionalities described above. Computer system 1000 may additionally include a processing acceleration unit 1006, which can include a digital signal processor (DSP), a special-purpose processor, and/or the like.

I/O subsystem 1008 may include user interface input devices and user interface output devices. User interface input devices may include a keyboard, pointing devices such as a mouse or trackball, a touchpad or touch screen incorporated into a display, a scroll wheel, a click wheel, a dial, a button, a switch, a keypad, audio input devices with voice command recognition systems, microphones, and other types of input devices. User interface input devices may include, for example, motion sensing and/or gesture recognition devices such as the Microsoft Kinect^{®} motion sensor that enables users to control and interact with an input device, such as the Microsoft Xbox^{®} 360 game controller, through a natural user interface using gestures and spoken commands. User interface input devices may also include eye gesture recognition devices such as the Google Glass^{®} blink detector that detects eye activity (e.g., 'blinking' while taking pictures and/or making a menu selection) from users and transforms the eye gestures as input into an input device (e.g., Google Glass^{®}). Additionally, user interface input devices may include voice recognition sensing devices that enable users to interact with voice recognition systems (e.g., Siri^{®} navigator), through voice commands.

User interface input devices may also include, without limitation, three dimensional (3D) mice, joysticks or pointing sticks, gamepads and graphic tablets, and audio/visual devices such as speakers, digital cameras, digital camcorders, portable media players, webcams, image scanners, fingerprint scanners, barcode reader 3D scanners, 3D printers, laser rangefinders, and eye gaze tracking devices. Additionally, user interface input devices may include, for example, medical imaging input devices such as computed tomography, magnetic resonance imaging, position emission tomography, medical ultrasonography devices. User interface input devices may also include, for example, audio input devices such as MIDI keyboards, digital musical instruments and the like.

User interface output devices may include a display subsystem, indicator lights, or non-visual displays such as audio output devices, etc. The display subsystem may be a cathode ray tube (CRT), a flat-panel device, such as that using a liquid crystal display (LCD) or plasma display, a projection device, a touch screen, and the like. In general, use of the term "output device" is intended to include all possible types of devices and mechanisms for outputting information from computer system 1000 to a user or other computer. For example, user interface output devices may include, without limitation, a variety of display devices that visually convey text, graphics and audio/video information such as monitors, printers, speakers, headphones, automotive navigation systems, plotters, voice output devices, and modems.

Computer system 1000 may comprise a storage subsystem 1018 that comprises software elements, shown as being currently located within a system memory 1010. System memory 1010 may store program instructions that are loadable and executable on processing unit 1004, as well as data generated during the execution of these programs.

Depending on the configuration and type of computer system 1000, system memory 1010 may be volatile (such as random access memory (RAM)) and/or non-volatile (such as read-only memory (ROM), flash memory, etc.) The RAM typically contains data and/or program modules that are immediately accessible to and/or presently being operated and executed by processing unit 1004. In some implementations, system memory 1010 may include multiple different types of memory, such as static random access memory (SRAM) or dynamic random access memory (DRAM). In some implementations, a basic input/output system (BIOS), containing the basic routines that help to transfer information between elements within computer system 1000, such as during start-up, may typically be stored in the ROM. By way of example, and not limitation, system memory 1010 also illustrates application programs 1012, which may include client applications, Web browsers, mid-tier applications, relational database management systems (RDBMS), etc., program data 1014, and an operating system 1016. By way of example, operating system 1016 may include various versions of Microsoft Windows^{®}, Apple Macintosh^{®}, and/or Linux operating systems, a variety of commercially-available UNIX^{®} or UNIX-like operating systems (including without limitation the variety of GNU/Linux operating systems, the Google Chrome^{®} OS, and the like) and/or mobile operating systems such as iOS, Windows^{®} Phone, Android^{®} OS, BlackBerry^{®} 10 OS, and Palm^{®} OS operating systems.

Storage subsystem 1018 may also provide a tangible computer-readable storage medium for storing the basic programming and data constructs that provide the functionality of some embodiments. Software (programs, code modules, instructions) that when executed by a processor provide the functionality described above may be stored in storage subsystem 1018. These software modules or instructions may be executed by processing unit 1004. Storage subsystem 1018 may also provide a repository for storing data used in accordance with the present disclosure.

Storage subsystem 1018 may also include a computer-readable storage media reader 1020 that can further be connected to computer-readable storage media 1022. Together and, optionally, in combination with system memory 1010, computer-readable storage media 1022 may comprehensively represent remote, local, fixed, and/or removable storage devices plus storage media for temporarily and/or more permanently containing, storing, transmitting, and retrieving computer-readable information.

Computer-readable storage media 1022 containing code, or portions of code, can also include any appropriate media known or used in the art, including storage media and communication media, such as but not limited to, volatile and non-volatile, removable and non-removable media implemented in any method or technology for storage and/or transmission of information. This can include tangible computer-readable storage media such as RAM, ROM, electronically erasable programmable ROM (EEPROM), flash memory or other memory technology, CD-ROM, digital versatile disk (DVD), or other optical storage, magnetic cassettes, magnetic tape, magnetic disk storage or other magnetic storage devices, or other tangible computer readable media. This can also include nontangible computer-readable media, such as data signals, data transmissions, or any other medium which can be used to transmit the desired information and which can be accessed by computer system 1000.

By way of example, computer-readable storage media 1022 may include a hard disk drive that reads from or writes to non-removable, nonvolatile magnetic media, a magnetic disk drive that reads from or writes to a removable, nonvolatile magnetic disk, and an optical disk drive that reads from or writes to a removable, nonvolatile optical disk such as a CD ROM, DVD, and Blu-Ray^{®} disk, or other optical media. Computer-readable storage media 1022 may include, but is not limited to, Zip^{®} drives, flash memory cards, universal serial bus (USB) flash drives, secure digital (SD) cards, DVD disks, digital video tape, and the like. Computer-readable storage media 1022 may also include, solid-state drives (SSD) based on non-volatile memory such as flash-memory based SSDs, enterprise flash drives, solid state ROM, and the like, SSDs based on volatile memory such as solid state RAM, dynamic RAM, static RAM, DRAM-based SSDs, magnetoresistive RAM (MRAM) SSDs, and hybrid SSDs that use a combination of DRAM and flash memory based SSDs. The disk drives and their associated computer-readable media may provide non-volatile storage of computer-readable instructions, data structures, program modules, and other data for computer system 1000.

Communications subsystem 1024 provides an interface to other computer systems and networks. Communications subsystem 1024 serves as an interface for receiving data from and transmitting data to other systems from computer system 1000. For example, communications subsystem 1024 may enable computer system 1000 to connect to one or more devices via the Internet. In some embodiments communications subsystem 1024 can include radio frequency (RF) transceiver components for accessing wireless voice and/or data networks (e.g., using cellular telephone technology, advanced data network technology, such as 3G, 4G or EDGE (enhanced data rates for global evolution), WiFi (IEEE 802.11 family standards, or other mobile communication technologies, or any combination thereof), global positioning system (GPS) receiver components, and/or other components. In some embodiments communications subsystem 1024 can provide wired network connectivity (e.g., Ethernet) in addition to or instead of a wireless interface.

In some embodiments, communications subsystem 1024 may also receive input communication in the form of structured and/or unstructured data feeds 1026, event streams 1028, event updates 1030, and the like on behalf of one or more users who may use computer system 1000.

By way of example, communications subsystem 1024 may be configured to receive data feeds 1026 in real-time from users of social networks and/or other communication services such as Twitter^{®} feeds, Facebook^{®} updates, web feeds such as Rich Site Summary (RSS) feeds, and/or real-time updates from one or more third party information sources.

Additionally, communications subsystem 1024 may also be configured to receive data in the form of continuous data streams, which may include event streams 1028 of real-time events and/or event updates 1030, that may be continuous or unbounded in nature with no explicit end. Examples of applications that generate continuous data may include, for example, sensor data applications, financial tickers, network performance measuring tools (e.g., network monitoring and traffic management applications), clickstream analysis tools, automobile traffic monitoring, and the like.

Communications subsystem 1024 may also be configured to output the structured and/or unstructured data feeds 1026, event streams 1028, event updates 1030, and the like to one or more databases that may be in communication with one or more streaming data source computers coupled to computer system 1000.

Computer system 1000 can be one of various types, including a handheld portable device (e.g., an iPhone^{®} cellular phone, an iPad^{®} computing tablet, a PDA), a wearable device (e.g., a Google Glass^{®} head mounted display), a PC, a workstation, a mainframe, a kiosk, a server rack, or any other data processing system.

Due to the ever-changing nature of computers and networks, the description of computer system 1000 depicted in the figure is intended only as a specific example. Many other configurations having more or fewer components than the system depicted in the figure are possible. For example, customized hardware might also be used and/or particular elements might be implemented in hardware, firmware, software (including applets), or a combination. Further, connection to other computing devices, such as network input/output devices, may be employed. Based on the disclosure and teachings provided herein, a person of ordinary skill in the art will appreciate other ways and/or methods to implement the various embodiments.

Although specific embodiments have been described, various modifications, alterations, alternative constructions, and equivalents are also encompassed within the scope of the appended claims. Embodiments are not restricted to operation within certain specific data processing environments, but are free to operate within a plurality of data processing environments. Additionally, although embodiments have been described using a particular series of transactions and steps, it should be apparent to those skilled in the art that the scope of the present disclosure is not limited to the described series of transactions and steps. Various features and aspects of the above-described embodiments may be used individually or jointly.

Further, while embodiments have been described using a particular combination of hardware and software, it should be recognized that other combinations of hardware and software are also within the scope of the present disclosure. Embodiments may be implemented only in hardware, or only in software, or using combinations thereof. The various processes described herein can be implemented on the same processor or different processors in any combination. Accordingly, where components or modules are described as being configured to perform certain operations, such configuration can be accomplished, e.g., by designing electronic circuits to perform the operation, by programming programmable electronic circuits (such as microprocessors) to perform the operation, or any combination thereof. Processes can communicate using a variety of techniques including but not limited to conventional techniques for inter process communication, and different pairs of processes may use different techniques, or the same pair of processes may use different techniques at different times.

The specification and drawings are, accordingly, to be regarded in an illustrative rather than a restrictive sense. It will, however, be evident that additions, subtractions, deletions, and other modifications and changes may be made thereunto without departing from the scope as set forth in the claims. Thus, although specific disclosure embodiments have been described, these are not intended to be limiting. Various modifications and equivalents are within the scope of the following claims.

The use of the terms "a" and "an" and "the" and similar referents in the context of describing the disclosed embodiments (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. The term "connected" is to be construed as partly or wholly contained within, attached to, or joined together, even if there is something intervening. Recitation of ranges of values herein are merely intended to serve as a shorthand method of referring individually to each separate value falling within the range, unless otherwise indicated herein and each separate value is incorporated into the specification as if it were individually recited herein. All methods described herein can be performed in any suitable order unless otherwise indicated herein or otherwise clearly contradicted by context. The use of any and all examples, or example language (e.g., "such as") provided herein, is intended merely to better illuminate embodiments and does not pose a limitation on the scope of the disclosure unless otherwise claimed. No language in the specification should be construed as indicating any non-claimed element as essential to the practice of the disclosure.

Disjunctive language such as the phrase "at least one of X, Y, or Z," unless specifically stated otherwise, is intended to be understood within the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

Preferred embodiments of this disclosure are described herein, including the best mode known for carrying out the disclosure. Variations of those preferred embodiments may become apparent to those of ordinary skill in the art upon reading the foregoing description. Those of ordinary skill should be able to employ such variations as appropriate and the disclosure may be practiced otherwise than as specifically described herein. Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein.

In the foregoing specification, aspects of the disclosure are described with reference to specific embodiments thereof, but those skilled in the art will recognize that the disclosure is not limited thereto. Various features and aspects of the above-described disclosure may be used individually or jointly. Further, embodiments can be utilized in any number of environments and applications beyond those described herein without departing from the scope of the appended claims. The specification and drawings are, accordingly, to be regarded as illustrative rather than restrictive.

## Claims

1. A method comprising:
receiving (102), by a computer system, an image-based document comprised of a plurality of pixels;
detecting (104), by the computer system, one or more text lines formed from a set of the plurality of pixels in the image-based document;
identifying (106), by the computer system, a set of bounding boxes within the image-based document to be sampled, each bounding box in the set of bounding boxes containing at least one of the one or more text lines, each bounding box specifying a position of each of the one or more text lines in the image-based document, wherein each bounding box includes a set of coordinates corresponding to each corner of the bounding box, wherein the set of coordinates specify the position of each bounding box relative to a coordinate plane for the image-based document, and wherein identifying the set of bounding boxes to be sampled further comprises:
deriving, for each bounding box, a length value and a width value using the set of coordinates for each bounding box; and
selecting the set of bounding boxes as bounding boxes having the greatest width values;
processing, by the computer system, pixels in each of the set of bounding boxes to identify a set of text characters;
determining (110), by the computer system, a first primary script classification, from a plurality of primary script classifications, for the set of text characters in each of the set of bounding boxes, by processing the at least one of the one or more text lines in each of the set of bounding boxes, each of the plurality of primary script classifications corresponding to one or more natural languages with at least one common characteristic, wherein the first primary script classification corresponds to more than one natural language; and
responsive to determining the first primary script classification, the computer system:
processing (116) the pixels in each of the set of bounding boxes to generate a set of text strings corresponding the set of bounding boxes;
processing (118) the set of text strings to determine a language using a recurrent neural network architecture, for the set of text strings, that corresponds to the first primary script classification; and
storing an output of the determined language for the image-based document.

2. The method of claim 1, wherein detecting of the plurality of text lines in the image-based document further includes predicting a probability of each pixel in the image-based document comprising text.

3. The method of claim 1, further comprising:
identifying an outer bound of a text area by processing pixels in the image-based document; and
assigning a first coordinate point of the set of coordinates specifying the outer bound of the bounding box relative to the coordinate plane for the image-based document.

4. The method of claim 1, further comprising:
responsive to determining that the first primary script classification corresponds to only one language, storing the output of the identified language for the image-based document as the one language associated with the first primary script classification.

5. The method of claim 1, wherein processing the text in each of the set of bounding boxes to be sampled to identify the first primary script classification further includes:
identifying, for each text line in each of the set of bounding boxes, a text line primary script classification identifying a primary script classification for each text line; and
aggregating each identified text line primary script classification for each text line, wherein the first primary script classification is identified as a primary script classification with a greatest number of aggregated identified text line primary script classification instances for text lines in each of the set of bounding boxes.

6. A cloud infrastructure node configured to identify a language of text in an image-based document, the cloud infrastructure node comprising:
a processor; and
a non-transitory computer-readable medium including instructions that, when executed by the processor, cause the processor to:
receive (102) an image-based document comprised of a plurality of pixels;
detect (104) one or more text lines formed a set of the plurality of pixels in the image-based document,
identify (106) a set of bounding boxes within the image-based document to be sampled, each bounding box in the set of bounding boxes containing at least one of the one or more text lines, each bounding box specifying a position of each of the one or more text lines in the image-based document, wherein each bounding box includes a set of coordinates corresponding to each corner of the bounding box, wherein the set of coordinates specify the position of each bounding box relative to a coordinate plane for the image-based document, and wherein identifying the set of bounding boxes to be sampled further comprises:
deriving, for each bounding box, a length value and a width value using the set of coordinates for each bounding box; and
selecting the set of bounding boxes as bounding boxes having the greatest width values;
process pixels in each of the set of bounding boxes to identify a set of text characters;
determine (110) a first primary script classification, from a plurality of primary script classifications, for the set of text characters in each of the set of bounding boxes, by processing the at least one of the one or more text lines in each of the set of bounding boxes, each of the plurality of primary script classifications corresponding to one or more natural languages with at least one common characteristic, wherein the first primary script classification corresponds to more than one natural language; and
responsive to determining that the first primary script classification corresponds to more than one language:
process (116) the pixels in each of the set of bounding boxes to generate a text string corresponding to each of the set of bounding boxes;
process (118) each generated text string using a recurrent neural network architecture to determine a language that corresponds to the first primary script classification; and
store an output of the determined language for the image-based document.

7. The cloud infrastructure node of claim 6, wherein the instructions further cause the processor to:
responsive to determining that the first primary script classification specifies only one language, store the output of the identified language for the image-based document as the one language associated with the primary script classification.

8. The cloud infrastructure node of claim 6, wherein processing the text in each of the set of bounding boxes to be sampled to identify the first primary script classification further includes:
identifying, for each text line in each of the set of bounding boxes, a text line primary script classification identifying a primary script classification for each text line; and
aggregating each identified text line primary script classification for each text line, wherein the first primary script classification is identified as a primary script classification with a greatest number of aggregated identified text line primary script classification instances for text lines in each of the set of bounding boxes.

9. The cloud infrastructure node of claim 6, wherein the plurality of text lines in the image-based document are detected using a distributed brokered networking (DBNet) neural network model using a multi-layer convolutional neural network model backbone.

10. The cloud infrastructure node of claim 6, wherein the first primary script classification of multiple primary script classifications is identified by a convolutional neural network model extracting a sequence of visual features from the image-based document and a recurrent neural network model predicting a text sequence from the extracted sequence of visual features.

11. The cloud infrastructure node of claim 6, wherein the determined language for the image-based document is determined using a bi-directional long short-term memory (LSTM) neural network model comprising an embedding layer to transform a character sequence of each text line into a numeric sequence and bi-directional LSTM layers extracting contextual features in the numeric sequence to determine the language.

12. A non-transitory computer-readable medium including stored thereon a sequence of instructions which, when executed by a processor causes the processor to execute a process, the process comprising:
receiving (102) an image-based document comprised of a plurality of pixels;
detecting (104) one or more text lines formed a set of the plurality of pixels in the image-based document,
identifying (106) a set of bounding boxes within the image-based document to be sampled, each bounding box in the set of bounding boxes containing at least one of the one or more text lines, each bounding box specifying a position of each of the one or more text lines in the image-based document, wherein each bounding box includes a set of coordinates corresponding to each corner of the bounding box, wherein the set of coordinates specify the position of each bounding box relative to a coordinate plane for the image-based document, and wherein identifying the set of bounding boxes to be sampled further comprises:
deriving, for each bounding box, a length value and a width value using the set of coordinates for each bounding box; and
selecting the set of bounding boxes as bounding boxes having the greatest width values;
processing pixels in each of the set of bounding boxes to identify a set of text characters;
determining (110) a first primary script classification, from a plurality of primary script classifications, for the set of text characters in each of the set of bounding, by processing the at least one of the one or more text lines in each of the set of bounding boxes, each of the plurality of primary script classifications corresponding to one or more natural languages with at least one common characteristic, wherein the first primary script classification corresponds to more than one natural language; and
responsive to determining that the first primary script classification corresponds to more than one language:
processing (116) the pixels in each of the set of bounding boxes to generate a text string corresponding to each of the set of bounding boxes;
processing (118) each generated text string using a recurrent neural network architecture to determine a language that corresponds to the first primary script classification; and
storing an output of the determined language for the image-based document.

13. The non-transitory computer-readable medium of claim 12, wherein the process further comprises:
processing sets of coordinates for each of the set of bounding boxes to derive an orientation of the image-based document; and
responsive to determining that the orientation of the image-based document is not in an upright orientation, rotating the orientation of the image-based document to the upright orientation.

14. The non-transitory computer-readable medium of claim 12, wherein the plurality of text lines in the image-based document are detected using a distributed brokered networking (DBNet) neural network model using a multi-layer convolutional neural network model backbone retrieved from a model store storing a set of models.

15. The non-transitory computer-readable medium of claim 12, wherein the process further comprises:
responsive to determining that the first primary script classification corresponds to only one language, providing the output of the identified language for the image-based document as the one language associated with the first primary script classification.

## Patentansprüche

1. Verfahren, das Folgendes umfasst:
Empfangen (102), durch ein Computersystem, eines bildbasierten Dokuments, das aus einer Vielzahl von Pixeln besteht;
Erfassen (104), durch das Computersystem, einer oder mehrerer Textzeilen, die aus einer Gruppe der Vielzahl von Pixeln im bildbasierten Dokument gebildet sind;
Identifizieren (106), durch das Computersystem, einer Gruppe von Begrenzungsrahmen innerhalb des bildbasierten Dokuments, die abgetastet werden sollen, wobei jeder Begrenzungsrahmen in der Gruppe von Begrenzungsrahmen mindestens eine der einen oder mehreren Textzeilen enthält, wobei jeder Begrenzungsrahmen eine Position jeder der einen oder mehreren Textzeilen im bildbasierten Dokument angibt, wobei jeder Begrenzungsrahmen eine Menge von Koordinaten enthält, die jeder Ecke der Begrenzungsrahmen entsprechen, wobei die Menge von Koordinaten die Position jedes Begrenzungsrahmens relativ zu einer Koordinatenebene für das bildbasierte Dokument angibt, und wobei das Identifizieren der Menge von Begrenzungsrahmen, die abgetastet werden sollen, ferner umfasst:
Ableiten eines Längenwerts und eines Breitenwerts für jeden Begrenzungsrahmen unter Verwendung des Koordinatensatzes für jeden Begrenzungsrahmen; und
Auswählen des Satzes von Begrenzungsrahmen als diejenigen Begrenzungsrahmen, die die größten Breitenwerte aufweisen;
Verarbeiten, durch das Computersystem, von Pixeln in jedem der Begrenzungsrahmen, um einen Satz von Textzeichen zu identifizieren;
Bestimmen (110), durch das Computersystem, einer ersten primären Schriftklassifizierung aus einer Vielzahl von primären Schriftklassifizierungen für den Satz von Textzeichen in jedem der Begrenzungsrahmen indem mindestens eine der einen oder mehreren Textzeilen in jedem der Begrenzungsrahmen verarbeitet wird, wobei jede der zahlreichen primären Schriftklassifizierungen einer oder mehreren natürlichen Sprachen mit mindestens einem gemeinsamen Merkmal entspricht, wobei die erste primäre Schriftklassifizierung mehr als einer natürlichen Sprache entspricht; und
wobei als Reaktion auf die Bestimmung der ersten primären Schriftklassifizierung das Computersystem folgende Schritte ausführt:
Verarbeiten (116) der Pixel in jedem der Begrenzungsrahmen, um eine Menge von Textzeichenfolgen zu erzeugen, die der Menge der Begrenzungsrahmen entspricht;
Verarbeiten (118) der Menge der Textzeichenfolgen, um unter Verwendung einer rekurrenten neuronalen Netzwerkarchitektur für die Menge der Textzeichenfolgen eine Sprache zu bestimmen, die der ersten primären Schriftklassifizierung entspricht; und
Speichern einer Ausgabe der bestimmten Sprache für das bildbasierte Dokument.

2. Verfahren nach Anspruch 1, wobei das Erfassen der Vielzahl von Textzeilen in dem bildbasierten Dokument ferner das Vorhersagen einer Wahrscheinlichkeit umfasst, dass jedes Pixel in dem bildbasierten Dokument Text enthält.

3. Verfahren nach Anspruch 1, das ferner umfasst:
Identifizieren einer äußeren Begrenzung eines Textbereichs durch Verarbeiten von Pixeln in dem bildbasierten Dokument; und
Zuweisen eines ersten Koordinatenpunkts der Menge von Koordinaten, die die äußere Begrenzung des Begrenzungsrahmens relativ zur Koordinatenebene für das bildbasierte Dokument spezifizieren.

4. Verfahren nach Anspruch 1, das ferner umfasst:
als Reaktion auf die Bestimmung, dass die erste primäre Schriftklassifizierung nur einer Sprache entspricht, Speichern der Ausgabe der identifizierten Sprache für das bildbasierte Dokument als die eine Sprache, die der ersten primären Schriftklassifizierung zugeordnet ist.

5. Verfahren nach Anspruch 1, wobei das Verarbeiten des Textes in jedem der Begrenzungsrahmen, die abgetastet werden sollen, zur Identifizierung der ersten primären Schriftklassifizierung ferner umfasst:
Identifizieren einer primären Schriftklassifizierung für jede Textzeile in jedem der Begrenzungsrahmen, wobei für jede Textzeile in jedem der Begrenzungsrahmen eine primäre Schriftklassifizierung für die Textzeile identifiziert wird; und
Aggregieren jeder identifizierten primären Schriftklassifizierung für jede Textzeile, wobei die erste primäre Schriftklassifizierung als die primäre Schriftklassifizierung mit der größten Anzahl aggregierter Instanzen der identifizierten primären Schriftklassifizierung für Textzeilen in jedem der Begrenzungsrahmen identifiziert wird.

6. Cloud-Infrastrukturknoten, der so konfiguriert ist, dass er eine Sprache von Text in einem bildbasierten Dokument identifiziert, wobei der Cloud-Infrastrukturknoten umfasst:
einen Prozessor; und
ein nicht-flüchtiges, computerlesbares Medium, das Anweisungen enthält, die, wenn sie vom Prozessor ausgeführt werden, den Prozessor zu Folgendem veranlassen:
Empfangen (102) eines bildbasierten Dokuments, das aus einer Vielzahl von Pixeln besteht;
Erfassen (104) einer oder mehrerer Textzeilen, die aus einer Gruppe der Vielzahl von Pixeln im bildbasierten Dokument gebildet sind;
Identifizieren (106) einer Gruppe von Begrenzungsrahmen innerhalb des bildbasierten Dokuments, die abgetastet werden sollen, wobei jeder Begrenzungsrahmen in der Menge der Begrenzungsrahmen mindestens eine der einen oder mehreren Textzeilen enthält; wobei jeder Begrenzungsrahmen eine Position jeder der einen oder mehreren Textzeilen im bildbasierten Dokument angibt, wobei jeder Begrenzungsrahmen eine Menge von Koordinaten enthält, die jeder Ecke der Begrenzungsrahmen entsprechen, wobei die Menge von Koordinaten die Position jedes Begrenzungsrahmens relativ zu einer Koordinatenebene für das bildbasierte Dokument angibt, und wobei das Identifizieren der Menge von Begrenzungsrahmen, die abgetastet werden sollen, ferner umfasst:
Ableiten eines Längenwerts und eines Breitenwerts für jeden Begrenzungsrahmen unter Verwendung des Koordinatensatzes für jeden Begrenzungsrahmen; und
Auswählen des Satzes von Begrenzungsrahmen als diejenigen Begrenzungsrahmen, die die größten Breitenwerte aufweisen;
Verarbeiten von Pixeln in jedem der Begrenzungsrahmen, um einen Satz von Textzeichen zu identifizieren;
Bestimmen (110) einer ersten primären Schriftklassifizierung aus einer Vielzahl von primären Schriftklassifizierungen für den Satz von Textzeichen in jedem der Begrenzungsrahmen indem mindestens eine der einen oder mehreren Textzeilen in jedem der Begrenzungsrahmen verarbeitet wird, wobei jede der zahlreichen primären Schriftklassifizierungen einer oder mehreren natürlichen Sprachen mit mindestens einem gemeinsamen Merkmal entspricht, wobei die erste primäre Schriftklassifizierung mehr als einer natürlichen Sprache entspricht; und
als Reaktion auf das Bestimmen, dass die erste primäre Schriftklassifizierung mehr als einer Sprache entspricht:
Verarbeiten (116) der Pixel in jedem der Begrenzungsrahmen, um eine Textzeichenfolge zu erzeugen, die jedem der Begrenzungsrahmen entspricht;
Verarbeiten (118) jeder erzeugten Textzeichenfolge unter Verwendung einer rekurrenten neuronalen Netzwerkarchitektur, um eine Sprache zu bestimmen, die der ersten primären Schriftklassifizierung entspricht; und
Speichern einer Ausgabe der bestimmten Sprache für das bildbasierte Dokument.

7. Cloud-Infrastrukturknoten nach Anspruch 6, wobei die Anweisungen den Prozessor ferner zu Folgendem veranlassen:
als Reaktion auf die Bestimmung, dass die erste primäre Schriftklassifizierung nur eine Sprache angibt, Speichern der Ausgabe der identifizierten Sprache für das bildbasierte Dokument als die eine Sprache, die der primären Schriftklassifizierung zugeordnet ist.

8. Cloud-Infrastrukturknoten nach Anspruch 6, wobei das Verarbeiten des Textes in jedem der Begrenzungsrahmen, die abgetastet werden sollen, zur Identifizierung der ersten primären Schriftklassifizierung ferner umfasst:
Identifizieren einer primären Schriftklassifizierung für jede Textzeile in jedem der Begrenzungsrahmen, wobei für jede Textzeile in jedem der Begrenzungsrahmen eine primäre Schriftklassifizierung für die Textzeile identifiziert wird; und
Aggregieren jeder identifizierten primären Schriftklassifizierung für jede Textzeile, wobei die erste primäre Schriftklassifizierung als die primäre Schriftklassifizierung mit der größten Anzahl aggregierter Instanzen der identifizierten primären Schriftklassifizierung für Textzeilen in jedem der Begrenzungsrahmen identifiziert wird.

9. Cloud-Infrastrukturknoten nach Anspruch 6, wobei die Vielzahl von Textzeilen in dem bildbasierten Dokument unter Verwendung eines verteilten ausgehandelten Netzwerk- (Distributed Brokered Networking, DBNet) Neuralnetzwerkmodells unter Verwendung eines mehrschichtigen Convolutional-Neuralnetzwerk-Modell-Backbones erfasst wird.

10. Cloud-Infrastrukturknoten nach Anspruch 6, wobei die erste primäre Schriftklassifizierung aus mehreren primären Schriftklassifizierungen durch ein Faltungs-Neuralnetzwerkmodell, das eine Sequenz visueller Merkmale aus dem bildbasierten Dokument extrahiert, und ein rekurrentes Neuralnetzwerkmodell, das eine Textsequenz aus der extrahierten Sequenz visueller Merkmale vorhersagt, identifiziert wird.

11. Cloud-Infrastrukturknoten nach Anspruch 6, wobei die ermittelte Sprache für das bildbasierte Dokument unter Verwendung eines bidirektionalen Long-Short-Term-Memory-Neuralnetzwerkmodells (LSTM) bestimmt wird, das eine Einbettungsschicht zur Umwandlung einer Zeichenfolge jeder Textzeile in eine numerische Folge und bidirektionale LSTM-Schichten umfasst, die Kontextmerkmale in der numerischen Folge extrahieren, um die Sprache zu bestimmen.

12. Nicht-flüchtiges, computerlesbares Medium, das eine Folge von Befehlen enthält, die, wenn sie von einem Prozessor ausgeführt werden, den Prozessor veranlasst, einen Prozess auszuführen, der umfasst:
Empfangen (102) eines bildbasierten Dokuments, das aus einer Vielzahl von Pixeln besteht;
Erfassen (104) einer oder mehrerer Textzeilen, die aus einer Gruppe der Vielzahl von Pixeln im bildbasierten Dokument gebildet sind;
Identifizieren (106) einer Menge von Begrenzungsrahmen innerhalb des bildbasierten Dokuments, die abgetastet werden sollen, wobei jeder Begrenzungsrahmen in der Menge von Begrenzungsrahmen mindestens eine der einen oder mehreren Textzeilen enthält, wobei jeder Begrenzungsrahmen eine Position jeder der einen oder mehreren Textzeilen im bildbasierten Dokument angibt, wobei jeder Begrenzungsrahmen eine Menge von Koordinaten enthält, die jeder Ecke der Begrenzungsrahmen entsprechen, wobei die Menge von Koordinaten die Position jedes Begrenzungsrahmens relativ zu einer Koordinatenebene für das bildbasierte Dokument angibt, und wobei das Identifizieren der Menge von Begrenzungsrahmen, die abgetastet werden sollen, ferner umfasst:
Ableiten eines Längenwerts und eines Breitenwerts für jeden Begrenzungsrahmen unter Verwendung des Koordinatensatzes für jeden Begrenzungsrahmen; und
Auswählen des Satzes von Begrenzungsrahmen als diejenigen Begrenzungsrahmen, die die größten Breitenwerte aufweisen;
Verarbeiten von Pixeln in jedem der Begrenzungsrahmen, um einen Satz von Textzeichen zu identifizieren;
Bestimmen (110) einer ersten primären Schriftklassifizierung aus einer Vielzahl von primären Schriftklassifizierungen für den Satz von Textzeichen in jeder der Menge der Begrenzungen indem mindestens eine der einen oder mehreren Textzeilen in jedem der Begrenzungsrahmen verarbeitet wird, wobei jede der zahlreichen primären Schriftklassifizierungen einer oder mehreren natürlichen Sprachen mit mindestens einem gemeinsamen Merkmal entspricht, wobei die erste primäre Schriftklassifizierung mehr als einer natürlichen Sprache entspricht; und
als Reaktion auf das Bestimmen, dass die erste primäre Schriftklassifizierung mehr als einer Sprache entspricht:
Verarbeiten (116) der Pixel in jedem der Begrenzungsrahmen, um eine Textzeichenfolge zu erzeugen, die jedem der Begrenzungsrahmen entspricht;
Verarbeiten (118) jeder erzeugten Textzeichenfolge unter Verwendung einer rekurrenten neuronalen Netzwerkarchitektur, um eine Sprache zu bestimmen, die der ersten primären Schriftklassifizierung entspricht; und
Speichern einer Ausgabe der bestimmten Sprache für das bildbasierte Dokument.

13. Nicht-flüchtiges computerlesbares Medium nach Anspruch 12, wobei der Prozess ferner umfasst:
Verarbeiten von Koordinatensätzen für jeden der Begrenzungsrahmen, um eine Ausrichtung des bildbasierten Dokuments abzuleiten; und
als Reaktion auf die Bestimmung, dass die Ausrichtung des bildbasierten Dokuments nicht aufrecht ist, Drehen der Ausrichtung des bildbasierten Dokuments in die aufrechte Ausrichtung.

14. Nicht-flüchtiges computerlesbares Medium nach Anspruch 12, wobei die Vielzahl von Textzeilen in dem bildbasierten Dokument unter Verwendung eines verteilten ausgehandelten Netzwerk- (DBNet) Neuralnetzwerkmodells unter Verwendung eines mehrschichtigen Convolutional-Neuralnetzwerk-Modell-Backbones erfasst wird, das aus einem Modellspeicher abgerufen wird, der einen Satz von Modellen speichert.

15. Nicht-flüchtiges computerlesbares Medium nach Anspruch 12, wobei der Prozess ferner umfasst:
als Reaktion auf die Bestimmung, dass die erste primäre Schriftklassifizierung nur einer Sprache entspricht, Bereitstellen der Ausgabe der identifizierten Sprache für das bildbasierte Dokument als die eine Sprache, die der ersten primären Schriftklassifizierung zugeordnet ist.

## Revendications

1. Procédé comprenant :
la réception (102), par un système informatique, d'un document à base d'images composé d'une pluralité de pixels ;
la détection (104), par le système informatique, d'une ou plusieurs lignes de texte formées à partir d'un ensemble de la pluralité de pixels dans le document à base d'images ;
l'identification (106), par le système informatique, d'un jeu de cadres de sélection au sein du document à base d'images à échantillonner, chaque cadre de sélection spécifiant une position de chacune de l'une ou plusieurs lignes de texte dans le document à base d'images, chaque cadre de sélection comprenant un jeu de coordonnées correspondant à chaque coin du cadre de sélection, le jeu de coordonnées précisant l'emplacement de chaque cadre de sélection relativement à un plan de coordonnées pour le document à base d'images, et l'identification du jeu de cadres de sélection à échantillonner comprenant en outre :
la dérivation, pour chaque cadre de sélection, d'une valeur de longueur et d'une valeur de largeur en utilisant le jeu de coordonnées pour chaque cadre de sélection ; et
la sélection du jeu de cadres de sélection en tant que cadres de sélection aux valeurs de largeur les plus grandes ;
le traitement, par le système informatique, des pixels dans chacun du jeu de cadres de sélection afin d'identifier un ensemble de caractères de texte ;
la détermination (110), par le système informatique, d'une première classification de script principal, parmi une pluralité de classifications de scripts principaux, pour l'ensemble de caractères de texte dans chacun du jeu de cadres de sélection, par le traitement de l'au moins une de l'une ou plusieurs lignes de texte dans chacun du jeu de cadres de sélection, chacune de la pluralité de classifications de scripts principaux correspondant à une ou plusieurs langues naturelles ayant au moins une caractéristique en commun, la première classification du script principal correspondant à plus d'une langue naturelle ; et
en réponse à la détermination de la première classification du script principal, le système informatique :
traitant (116) les pixels dans chacun du jeu de cadres de sélection pour générer un jeu de chaînes de texte correspondant au jeu de cadres de sélection ;
traitant (118) le jeu de cadres de sélection pour déterminer une langue en utilisant une architecture de réseau de neurones récurrente, pour le jeu de chaînes de texte, qui correspond à la première classification du script principal ; et
enregistrant une sortie de la langue déterminée pour le document à base d'images.

2. Procédé selon la revendication 1, la détection de la pluralité de lignes de texte du document à base d'images comprenant en outre la prédiction d'une probabilité que chaque pixel dans le document à base d'images comprenne du texte.

3. Procédé selon la revendication 1, comprenant en outre :
l'identification d'un pourtour extérieur d'une zone de texte par le traitement de pixels dans le document à base d'images ; et
l'affectation d'un premier point de coordonnées du jeu de coordonnées spécifiant le pourtour extérieur du cadre de sélection relativement au plan de coordonnées pour le document à base d'images.

4. Procédé selon la revendication 1, comprenant en outre :
en réponse à la détermination que la première classification du script principal ne correspond qu'à une seule langue, l'enregistrement de la sortie de la langue identifiée pour le document à base d'images comme étant la langue correspondant à la première classification du script principal.

5. Procédé selon la revendication 1, le traitement du texte dans chacun du jeu de cadres de sélection à échantillonner pour identifier la première classification du script principal comprenant en outre :
l'identification, pour chaque ligne de texte dans chacun du jeu de cadres de sélection, d'une classification du script principal de ligne de texte identifiant une classification du script principal pour chaque ligne de texte ; et
l'agrégation de chaque classification du script principal de ligne de texte pour chaque ligne de texte identifiée, la première classification du script principal étant identifiée comme une classification du script principal comportant le plus grand nombre de cas de classification du script principal de ligne de texte agrégés identifiés pour des lignes de texte dans chacun du jeu de cadres de sélection.

6. Nœud d'infrastructure cloud configuré pour identifier une langue de texte dans un document à base d'images, le nœud d'infrastructure cloud comprenant :
un processeur ; et
un support lisible par ordinateur non transitoire comprenant des instructions qui, lorsqu'elles sont exécutées par le processeur, amènent le processeur à :
recevoir (102) un document à base d'images composé d'une pluralité de pixels ;
détecter (104) une ou plusieurs lignes de texte constituant un ensemble de la pluralité de pixels dans le document à base d'images,
identifier (106) un jeu de cadres de sélection au sein du document à base d'images à échantillonner, chaque cadre de sélection du jeu de cadres de sélection contenant au moins une de l'une ou plusieurs lignes de texte, chaque cadre de sélection spécifiant une position de chacune de l'une ou plusieurs lignes de texte dans le document à base d'images, chaque cadre de sélection comprenant un jeu de coordonnées correspondant à chaque coin du cadre de sélection, le jeu de coordonnées spécifiant la position de chaque cadre de sélection relativement à un plan de coordonnées pour le document à base d'images, et l'identification du jeu de cadres de sélection à échantillonner comprenant en outre :
la dérivation, pour chaque cadre de sélection, d'une valeur de longueur et d'une valeur de largeur en utilisant le jeu de coordonnées pour chaque cadre de sélection ; et
la sélection du jeu de cadres de sélection en tant que cadres de sélection aux valeurs de largeur les plus grandes ;
traiter des pixels dans chacun du jeu de cadres de sélection afin d'identifier un ensemble de caractères de texte ;
déterminer (110) une première classification de script principal, parmi une pluralité de classifications de scripts principaux, pour l'ensemble de caractères de texte dans chacun du jeu de cadres de sélection, par le traitement de l'au moins une de l'une ou plusieurs lignes de texte dans chacun du jeu de cadres de sélection, chacune de la pluralité de classifications de scripts principaux correspondant à une ou plusieurs langues naturelles ayant au moins une caractéristique en commun, la première classification du script principal correspondant à plus d'une langue naturelle ; et
en réponse à la détermination que la première classification du script principal correspond à plus d'une langue :
traiter (116) les pixels dans chacun du jeu de cadres de sélection pour générer un jeu de chaînes de texte correspondant à chacun du jeu de cadres de sélection ;
traiter (118) chaque chaîne de texte générée en utilisant une architecture de réseau de neurones récurrente pour déterminer une langue correspondant à la première classification du script principal ; et
enregistrer une sortie de la langue déterminée pour le document à base d'images.

7. Nœud d'infrastructure cloud selon la revendication 6, les instructions amenant en outre le processeur à :
enregistrer, en réponse à la détermination que la première classification du script principal ne spécifie qu'une seule langue, la sortie de la langue identifiée pour le document à base d'images comme étant la langue qui est associée à la première classification du script principal.

8. Nœud d'infrastructure cloud selon la revendication 6, le traitement du texte dans chacun du jeu de cadres de sélection à échantillonner pour identifier la première classification du script principal comprenant en outre :
l'identification, pour chaque ligne de texte dans chacun du jeu de cadres de sélection, d'une classification du script principal de ligne de texte identifiant une classification du script principal pour chaque ligne de texte ; et
l'agrégation de chaque classification du script principal de ligne de texte identifiée pour chaque ligne de texte, la première classification du script principal étant identifiée comme une classification du script principal comportant le plus grand nombre de cas de classification du script principal de ligne de texte agrégés identifiés pour des lignes de texte dans chacun du jeu de cadres de sélection.

9. Nœud d'infrastructure cloud selon la revendication 6, la pluralité de lignes de texte dans le document à base d'images étant détectées à l'aide d'un modèle à réseau neuronal à réseau courté distribué (DBNet) faisant usage d'une structure à modèle à réseau neuronal convolutif multicouches.

10. Nœud d'infrastructure cloud selon la revendication 6, la première classification du script principal de multiples classifications de script principal étant identifiée par un modèle à réseau neuronal convolutif, qui extrait une séquence de caractéristiques visuelles du document à base d'images, et la prédiction, par un modèle récurrent à réseau de neurones, d'une séquence de texte de la séquence extraite de caractéristiques visuelles.

11. Nœud d'infrastructure cloud selon la revendication 6, la langue déterminée pour le document à base d'images étant déterminée à l'aide d'un modèle à réseau neuronal à longue mémoire à court terme (LSTM) bidirectionnel comprenant une couche d'intégration pour transformer une chaîne de caractères de chaque ligne de texte en séquence numérique, et des couches LSTM bidirectionnelles extrayant des caractéristiques contextuelles dans la séquence numérique pour déterminer la langue.

12. Support lisible par ordinateur non transitoire comprenant des instructions enregistrées dans celui-ci, qui, lorsqu'elles sont exécutées par un processeur, amènent le processeur à exécuter un processus, le processus comprenant :
la réception (102) d'un document à base d'images composé d'une pluralité de pixels ;
la détection (104) d'une ou plusieurs lignes de texte constituant un ensemble de la pluralité de pixels dans le document à base d'images,
l'identification (106) d'un jeu de cadres de sélection au sein du document à base d'images, chaque cadre de sélection du jeu de cadres de sélection contenant au moins une de l'une ou plusieurs lignes de texte, chaque cadre de sélection spécifiant une position de chacune de l'une ou plusieurs lignes de texte dans le document à base d'images, chaque cadre de sélection comprenant un jeu de coordonnées correspondant à chaque coin du cadre de sélection, le jeu de coordonnées spécifiant l'emplacement de chaque cadre de sélection relativement à un plan de coordonnées pour le document à base d'images, et l'identification du jeu de cadres de sélection à échantillonner comprenant en outre :
la dérivation, pour chaque cadre de sélection, d'une valeur de longueur et d'une valeur de largeur en utilisant le jeu de coordonnées pour chaque cadre de sélection ; et
la sélection du jeu de cadres de sélection en tant que cadres de sélection aux valeurs de largeur les plus grandes ;
le traitement, par le système informatique, de pixels dans chacun du jeu de cadres de sélection afin d'identifier un ensemble de caractères de texte ;
la détermination (110) d'une première classification de script principal, parmi une pluralité de classifications de scripts principaux, pour l'ensemble de caractères de texte dans chacun du jeu de cadres de sélection, par le traitement de l'au moins une de l'une ou plusieurs lignes de texte dans chacun du jeu de cadres de sélection, chacune de la pluralité de classifications de scripts principaux correspondant à une ou plusieurs langues naturelles ayant au moins une caractéristique en commun, la première classification du script principal correspondant à plus d'une langue naturelle ; et
en réponse à la détermination que la première classification du script principal correspond à plus d'une langue :
le traitement (116) des pixels dans chacun du jeu de cadres de sélection pour générer un jeu de chaînes de texte correspondant au jeu de cadres de sélection ;
le traitement (118) de chaque chaîne de texte générée en utilisant une architecture de réseau de neurones récurrente pour déterminer une langue correspondant à la première classification du script principal ; et
l'enregistrement d'une sortie de la langue déterminée pour le document à base d'images.

13. Support lisible par ordinateur non transitoire selon la revendication 12, le processus comprenant en outre :
le traitement de jeux de coordonnées pour chacun du jeu de cadres de sélection afin de dériver une orientation du document à base d'images ; et
en réponse à la détermination que l'orientation du document à base d'images n'est pas une orientation verticale, la rotation de l'orientation du document à base d'images en orientation verticale.

14. Support lisible par ordinateur non transitoire selon la revendication 12, la pluralité de lignes de texte dans le document à base d'images étant détectées à l'aide d'un réseau neuronal à réseau courté distribué (DBNet) faisant usage d'une structure à modèle à réseau neuronal convolutif multicouches extraite d'une mémoire de modèles où est enregistrée une série de modèles.

15. Support lisible par ordinateur non transitoire selon la revendication 12, le processus comprenant en outre :
en réponse à la détermination que la première classification de script principal ne correspond qu'à une seule langue, établir la sortie de la langue identifié pour le document à base d'images comme étant la langue correspondant à la première classification de script principal.
